(19) **Europäisches Patentamt / European Patent Office / Office européen des brevets**

(11) **EP 4 746 263 A1**

(12) **EUROPEAN PATENT APPLICATION**
published in accordance with Art. 153(4) EPC

(43) Date of publication:
20.05.2026 Bulletin 2026/21

(21) Application number: 24865664.7

(22) Date of filing: 23.07.2024

(51) International Patent Classification (IPC):
H02K 7/14 (2006.01)    H02K 9/14 (2006.01)
H02K 9/26 (2006.01)    H02K 5/08 (2006.01)
H02K 5/20 (2006.01)    H02K 9/06 (2006.01)
A47L 9/22 (2006.01)    A47L 9/16 (2006.01)

(52) Cooperative Patent Classification (CPC):
A47L 9/16; A47L 9/22; H02K 5/08; H02K 5/20;
H02K 7/14; H02K 9/06; H02K 9/14; H02K 9/26

(86) International application number:
PCT/KR2024/010620

(87) International publication number:
WO 2025/058221 (20.03.2025 Gazette 2025/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 11.09.2023 KR 20230120491

(71) Applicant: Samsung Electronics Co., Ltd.
Suwon-si, Gyeonggi-do 16677 (KR)

(72) Inventors:
• CHO, Youngjun
  Suwon-si, Gyeonggi-do 16677 (KR)

• CHOI, Ingyu
  Suwon-si, Gyeonggi-do 16677 (KR)
• LEE, Hyunju
  Suwon-si, Gyeonggi-do 16677 (KR)
• CHO, Dongjin
  Suwon-si, Gyeonggi-do 16677 (KR)
• CHO, Jeongwang
  Suwon-si, Gyeonggi-do 16677 (KR)
• CHA, Seungryong
  Suwon-si, Gyeonggi-do 16677 (KR)

(74) Representative: Gulde & Partner
Patent- und Rechtsanwaltskanzlei mbB
Berliner Freiheit 2
10785 Berlin (DE)

(54) **MOTOR ASSEMBLY, DUST COLLECTION DEVICE, AND CLEANER**

(57) A motor assembly according to an embodiment includes a control board, a fan motor, an impeller configured to be rotated by the fan motor, a first guide that covers the impeller and guides sucked-in air in an axial direction of the impeller along an air flow path to be directed to the control board, and a second guide disposed between the first guide and the control board to cover the fan motor and guide air along the air flow path, and the second guide is located apart from the control board, and includes a nozzle portion having a gradient of a certain angle with respect to the axial direction at an end facing the control board.

EP 4 746 263 A1

# FIG. 12

## Description

### Technical Field

Example embodiments relate to a motor assembly, a dust collection device, and a cleaner.

### Background Art

A vacuum cleaner, for example, may use negative pressure to suck in air containing foreign substances such as dust.

The vacuum cleaner may include a dust collection device that separates foreign substances from the sucked-in air and stores the separated foreign substances in a dust collector.

The dust collection device may include a motor assembly configured to generate suction force in the vacuum cleaner. The motor assembly may be configured to cause the vacuum cleaner to suck in air containing foreign substances and discharge the air. As the vacuum cleaner is miniaturized, a rotation speed of a motor may increase to prevent a decrease in suction force. Generally, as the rotation speed of the motor increases, a control board that supplies power to the motor may generate excessive heat. Generally, as the rotation speed of the motor increases, noise occurring in the motor assembly may increase. Generally, as the rotation speed of the motor increases, vibration generated from the motor assembly may increase.

### Disclosure of Invention

### Solution to Problem

A motor assembly according to an example embodiment may be a motor assembly configured to generate suction force in a vacuum cleaner.

A motor assembly according to an example embodiment may include a control board and a fan motor.

A motor assembly according to an example embodiment may include an impeller that is rotated by a fan motor.

A motor assembly according to an example embodiment may include a first guide that covers an impeller and guides sucked-in air in an axial direction of the impeller along an air flow path to be directed to the control board.

A motor assembly according to an example embodiment may include a second guide disposed between a first guide and a control board to cover a fan motor and guide air along an air flow path.

A second guide of a motor assembly according to an example embodiment may be located apart from a control board.

A second guide of a motor assembly according to an example embodiment may include a nozzle portion having a gradient of a certain angle with respect to an axial direction at an end facing a control board.

A dust collection device according to an example embodiment may be configured to generate suction force in a vacuum cleaner and temporarily store foreign substances sucked in by the vacuum cleaner.

A dust collection device according to an example embodiment may include a motor portion.

A motor portion of a dust collection device according to an example embodiment may include a motor assembly.

A dust collection device according to an example embodiment may include a dust collector configured to separate foreign substances from air sucked in by a vacuum cleaner and temporarily store the foreign substances.

A vacuum cleaner according to an example embodiment may include a suction device configured to suck in foreign substances.

A vacuum cleaner according to an example embodiment may include a vacuum cleaner body including a dust collection device and configured to store foreign substances sucked in through a suction device.

A vacuum cleaner according to an example embodiment may include a transfer portion disposed between a suction device and a vacuum cleaner body and configured to transfer sucked-in foreign substances from the suction device to the vacuum cleaner body.

### Brief Description of Drawings

FIG. 1 is a perspective view of a vacuum cleaner according to an example embodiment.

FIG. 2 is a perspective view of a vacuum cleaner body according to an example embodiment.

FIG. 3 is an exploded perspective view of a vacuum cleaner body according to an example embodiment.

FIG. 4 is a perspective view of a dust collection device with an open discharge cap, according to an example embodiment.

FIG. 5 is a perspective view showing connection between a dust collector and a motor portion of a dust collection device, according to an example embodiment.

FIG. 6 is a perspective view of a motor portion according to an example embodiment.

FIG. 7 is an exploded perspective view showing a housing separated from a motor portion, according to an example embodiment.

FIG. 8 is an exploded perspective view illustrating a filter further separated from a motor assembly of FIG. 7, according to an example embodiment.

FIG. 9 is an exploded perspective view showing a filter support further separated from the motor assembly of FIG. 8.

FIG. 10 is an exploded perspective view showing a support frame further separated from the motor assembly of FIG. 9.

FIG. 11 is an exploded perspective view showing separation of a filter assembly according to an example embodiment.

FIG. 12 is a perspective view of a motor assembly viewed from a different angle, according to an example embodiment.

FIG. 13 is an exploded perspective view showing a guide cover separated from the motor assembly of FIG. 11, according to an example embodiment.

FIG. 14 is a cross-sectional perspective view of a cross section of the motor assembly of FIG. 12.

FIG. 15 is an exploded perspective view of a state in which a first guide and a second guide are separated from the motor assembly of FIG. 12 viewed from a different direction, according to an example embodiment.

FIG. 16 is a perspective view illustrating an operation of a clip portion of a second guide, according to an example embodiment.

FIG. 17 is a partial cross-sectional view of a second guide according to an example embodiment.

FIG. 18 is a cross-sectional view of the motor portion of FIG. 6 viewed in a direction B-B, according to an example embodiment.

FIG. 19 is a cross-sectional view of the motor portion of FIG. 6 viewed in a direction C-C, according to an example embodiment.

FIG. 20 is a diagram for explaining noise of a motor assembly according to an example embodiment.

## Best Mode for Carrying out the Invention

It needs to be understood that various embodiments and terms used in this document are not intended to limit the technical features described in this document to specific embodiments, but rather to encompass various modifications, equivalents, or alternatives of the embodiments.

With regard to a description of drawings, similar reference numerals may be used for similar or related components.

The singular form of a noun corresponding to an item may include one or more of the items, unless the context clearly indicates otherwise.

In this document, each of the phrases "A or B", "at least one of A and B", "at least one of A or B", "A, B, or C", "at least one of A, B, and C", and "at least one of A, B, or C" may include any one of the items listed together in the phrase, or all possible combinations thereof.

The term "and/or" includes any combination of a plurality of related described components or any one of the plurality of related described components.

The terms such as "1st", "2nd", or "first" or "second" may be used merely to distinguish one component from another, and do not limit the components in any other aspect (e.g., importance or order).

When a component (e.g., a first component) is referred to as being "coupled" or "connected" to another component (e.g., a second component), with or without the terms "functionally" or "communicatively," it means that the component may be connected to the other component directly (e.g., wired), wirelessly, or through a third component.

The terms "comprise (include)" or "have" are intended to specify the presence of a feature, number, step, operation, component, part, or combination thereof described in this document, but do not exclude the presence or addition of one or more other features, numbers, steps, operations, components, parts, or combinations thereof.

When a component is said to be "connected," "coupled," "supported," or "in contact with" another component, this includes not only a case in which the components are directly connected, coupled, supported, or in contact, but also a case in which the components are indirectly connected, coupled, supported, or in contact through a third component.

When a component is said to be "on" another component, this includes not only a case in which the component is in contact with the other component, but also a case in which there is another component between the two components.

A vacuum cleaner, for example, may suck in foreign substances such as dust along with the air by using the suction force generated by a suction fan, filter out the foreign substances, and store the foreign substances in a dust collector.

Hereinafter, example embodiments according to the present disclosure will be described in detail with reference to the contents described in the attached drawings. The same reference numbers or symbols presented in each drawing represent parts or components that perform substantially the same functions.

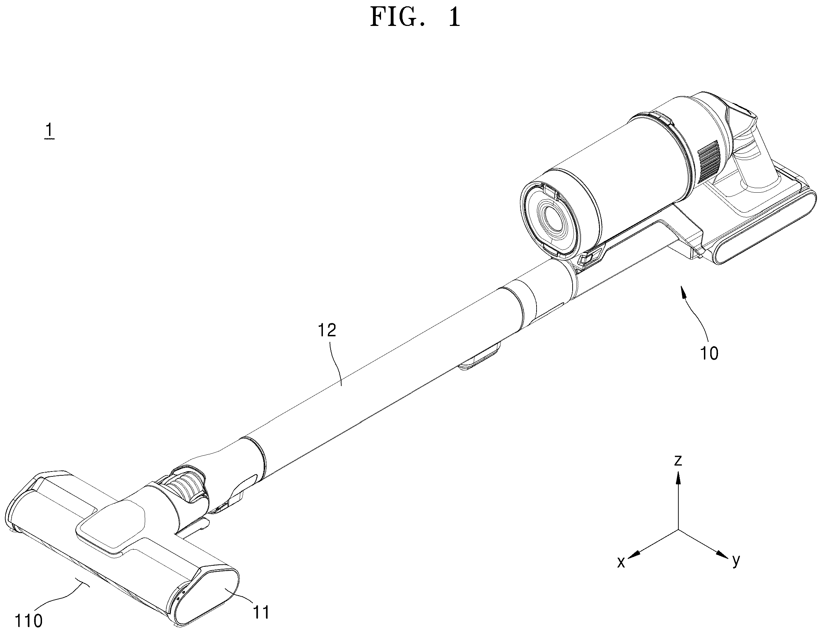

FIG. 1 is a perspective view of a vacuum cleaner 1 according to an example embodiment.

Referring to FIG. 1, the vacuum cleaner 1 according to an example embodiment may include a vacuum cleaner body 10, a suction device 11, and a transfer portion 12. The vacuum cleaner body 10 may provide suction force to the vacuum cleaner 1. The vacuum cleaner body 10 may provide suction force to the vacuum cleaner 1. The vacuum cleaner body 10 may generate suction force in the vacuum cleaner 1. The vacuum cleaner body 10 may provide suction force to the suction device 11. The vacuum cleaner body 10 may generate suction force in the suction device 11. The vacuum cleaner body 10 may be connected to the suction device 11 through the transfer portion 12. The transfer portion 12 may be located between the suction device 11 and the vacuum cleaner body 10. The transfer portion 12 may connect the vacuum cleaner 1 to the suction device 11. The transfer portion 12 may transfer the suction force provided by the vacuum cleaner body 10 to the suction device 11.

The suction device 11 according to an example embodiment may include a first suction portion 110. The suction device 11 may suck in air through the first suction portion 110. The suction device 11 may be configured to suck in foreign substances through the first suction portion 110. The suction device 11 may transfer sucked-in air from the first suction portion 110 to the vacuum cleaner body 10. The suction device 11 may transfer sucked-in foreign substances from the first suction portion 110 to the vacuum cleaner body 10. The suction device 11 may be located on a surface on which an object to be cleaned is located. The object to be cleaned may be a surface of the floor. The suction device 11 may not transfer foreign substances having a certain size or larger to the vacuum cleaner body 10. However, the arrangement and function of the suction device 11 are not limited to the above description.

The transfer portion 12 according to an example embodiment may transfer air sucked in by the suction device 11 to the vacuum cleaner body 10. The transfer portion 12 may transfer sucked-in foreign substances from the suction device 11 to the vacuum cleaner body 10. The transfer portion 12 may extend in a direction parallel to the x-axis. The transfer portion 12 may extend in a first direction. The transfer portion 12 may extend a long way. A length by which the transfer portion 12 extends may be a length that allows the suction device 11 to be positioned on a surface on which the object to be cleaned is located when a user holds the vacuum cleaner body 10 in an upright position. The vacuum cleaner 1 may be a stick-type vacuum cleaner 1. The user may clean a surface of the object to be cleaned in an upright position by using the vacuum cleaner 1. However, the functions of the transfer portion 12 and the vacuum cleaner 1 are not limited to the above description. The shape and whether the transfer portion 12 are required are not limited to the above description. For example, the vacuum cleaner 1 according to an example embodiment may not include the transfer portion 12.

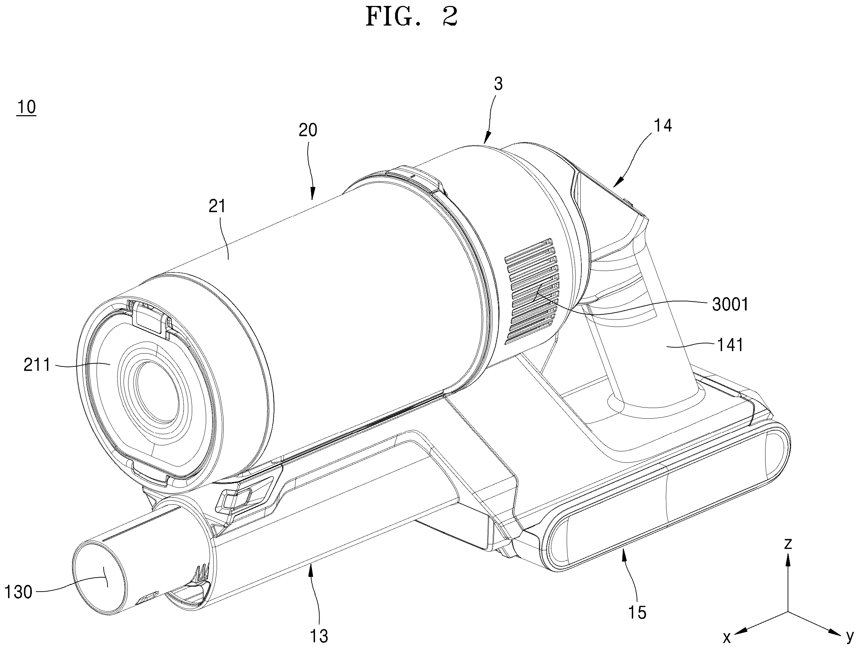

FIG. 2 is a perspective view of the vacuum cleaner body 10 according to an example embodiment.

Referring to FIGS. 1 and 2, the vacuum cleaner body 10 according to an example embodiment may include a connector 13. The connector 13 may be connected to the transfer portion 12. The connector 13 may provide suction force to the suction device 11. The connector 13 may generate suction force in the suction device 11. The connector 13 may include a second suction portion 130. The second suction portion 130 may suck in air. The second suction portion 130 may be connected to the first suction portion 110. The second suction portion 130 may suck in foreign substances. The second suction portion 130 may transfer foreign substances to a dust collection device 20. However, the function and role of the configuration of the connector 13 are not limited to the above description.

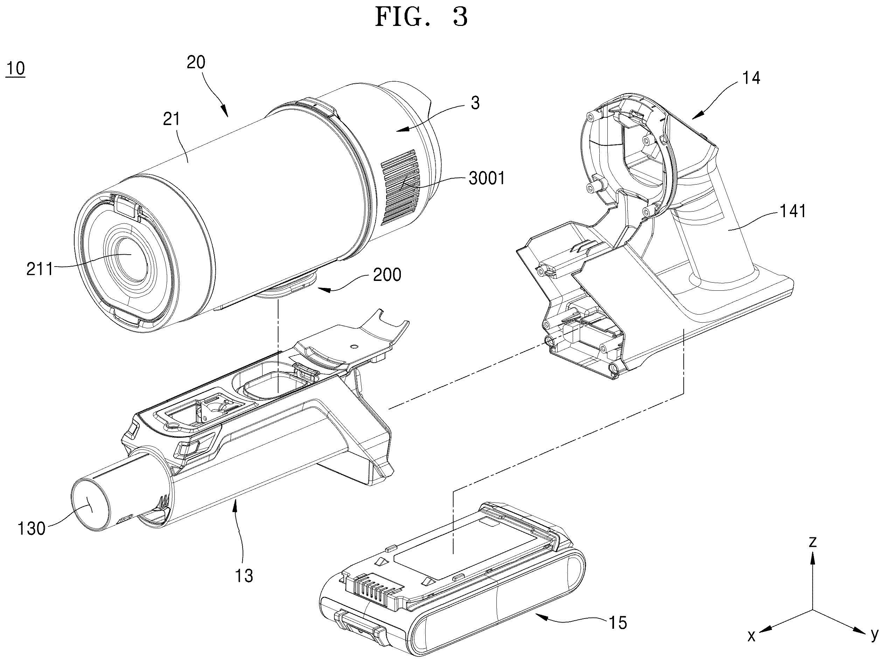

FIG. 3 is an exploded perspective view of the vacuum cleaner body 10 according to an example embodiment.

Referring to FIGS. 1 to 3, the vacuum cleaner body 10 according to an example embodiment may include the dust collection device 20. The dust collection device 20 may suck in air. The dust collection device 20 may suck in foreign substances. The dust collection device 20 may provide suction force to the vacuum cleaner body 10. The dust collection device 20 may generate suction force in the vacuum cleaner body 10. The dust collection device 20 may provide suction force to the connector 13. The dust collection device 20 may include a third suction portion 200. The third suction portion 200 may suck in foreign substances. The third suction portion 200 may be connected to the second suction portion 130. The third suction portion 200 may be coupled to the connector 13. The connector 13 may connect the third suction portion 200 to the first suction portion 110. The dust collection device 20 may include a discharge portion 3001. The discharge portion 3001 may discharge the air sucked in by the dust collection device 20. The dust collection device 20 may be configured to suck in air through the third suction portion and discharge the air through the discharge portion 3001.

The dust collection device 20 according to an example embodiment may be a cyclone-type dust collection device 20. The vacuum cleaner 1 may be a cyclone-type vacuum cleaner 1. However, the types of dust collection device 20 and vacuum cleaner 1 are not limited to the above description.

The dust collection device 20 according to an example embodiment may include a dust collector 21. The dust collector 21 may store foreign substances sucked in by the dust collection device 20. The dust collector 21 may temporarily store foreign substances. A method by which the dust collector 21 stores foreign substances may utilize the cyclone principle. However, the function and principle of the dust collector 21 are not limited to the above description.

The vacuum cleaner body 10 according to an example embodiment may include a manipulator 14. The user may manipulate the vacuum cleaner body 10 through the manipulator 14. The manipulator 14 may be electrically connected to the dust collection device 20. The manipulator 14 may include a handle 141. The handle 141 may be a portion through which the user holds the vacuum cleaner body 10. However, the function of the manipulator 14 is not limited to the above description.

The vacuum cleaner body 10 according to an example embodiment may include a battery portion 15. The battery portion 15 may supply power to the manipulator 14. The battery portion 15 may supply power to the dust collection device 20 through the manipulator 14. The battery portion 15 may be located below the manipulator 14. However, the function and arrangement of the battery portion 15 are not limited to the above description.

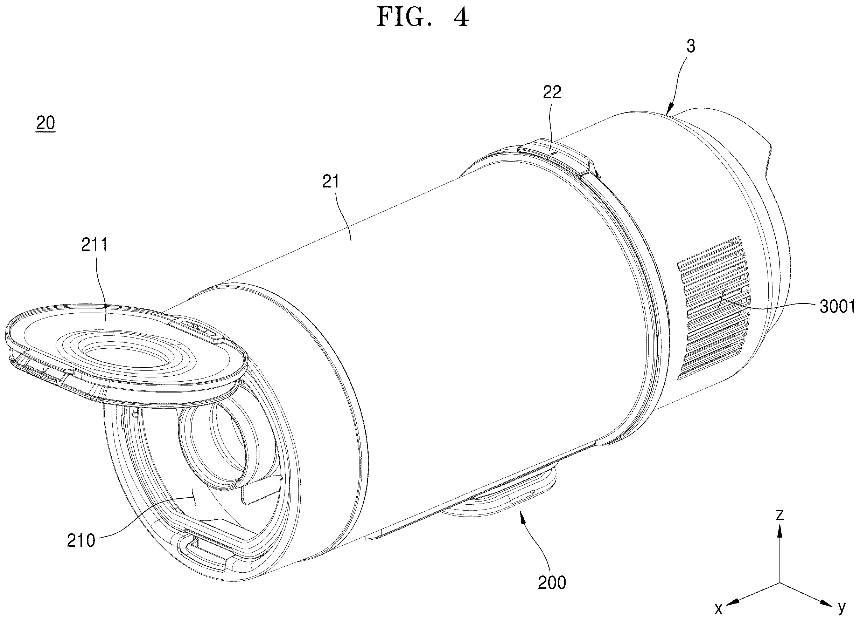

FIG. 4 is a perspective view of the dust collection device 20 with an open discharge cap 211 according to an example embodiment.

Referring to FIG. 4, the dust collection device 20 according to an example embodiment may include a storage portion 210. The dust collector 21 may include the storage portion 210 configured to store foreign substances therein. The storage portion 210 may store foreign substances sucked in by the dust collection device 20. The storage portion 210 may temporarily store foreign substances. The foreign substances sucked in by the dust collection device 20 may be stored in the storage portion 210 inside the dust collector 21. However, the function of the storage portion 210 is not limited to the above description.

The dust collection device 20 according to an example embodiment may include the discharge cap 211. The dust collector 21 may include the discharge cap 211. The discharge cap 211 may be located at one side surface of the dust collector 21. The dust collector 21 may open the discharge cap 211. The dust collector 21 may open the discharge cap 211 to expose the storage portion 210 inside the dust collector 21 to the outside. The user may open the discharge cap 211 to discharge foreign substances temporarily stored in the dust collector 21 to the outside. However, the function and arrangement of the discharge cap 211 are not limited to the above description.

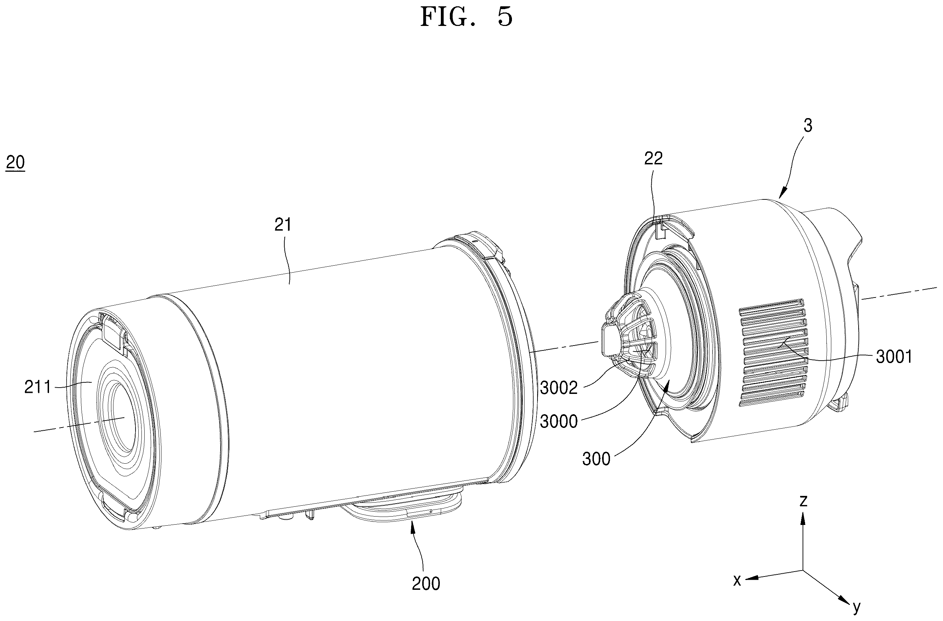

FIG. 5 is a perspective view showing connection between the dust collector 21 and a motor portion 3 of the dust collection device 20 according to an example embodiment.

Referring to FIG. 5, the dust collection device 20 according to an example embodiment may include the motor portion 3. The motor portion 3 may provide suction force to the dust collection device 20. The motor portion 3 may generate suction force in the dust collection device 20. The motor portion 3 may provide suction force to the dust collector 21. The motor portion 3 may generate suction force in the dust collector 21.

The motor portion 3 according to an example embodiment may include a fourth suction portion 3000. The motor portion 3 may generate suction force through the fourth suction portion 3000. The motor portion 3 may provide suction force through the fourth suction portion 3000. The motor portion 3 may suck in air through the fourth suction portion 3000 and discharge the air through the discharge portion 3001.

The dust collector 21 and the motor portion 3 according to an example embodiment may be connected to each other in the x-axis direction. The dust collector 21 and the motor portion 3 may be connected to each other in the first direction. The connection between the dust collector 21 and the motor portion 3 may mean that an air flow path formed inside the dust collector 21 and an air flow path formed inside the motor portion 3 are connected to each other.

The dust collector 21 according to an example embodiment may be separated through a separation manipulator 22. However, a method by which the motor portion 3 and the dust collector 21 are separated is not limited to the above description.

Referring back to FIGS. 4 and 5, the dust collector 21 according to an example embodiment may separate and store foreign substances inside the air sucked in by the third suction portion 200. The dust collector 21 may collect the foreign substances in the air sucked in by the third suction portion 200. The dust collector 21 may remove the foreign substances inside the air sucked in by the third suction portion 200 and transfer the foreign substances to the motor portion 3. The motor portion 3 may receive, from the dust collector 21, air from which foreign substances have been removed. Internal foreign substances may be removed before the air sucked in by the dust collection device 20 moves from the dust collector 21 to the motor portion 3. The internal foreign substances may be separated before the air sucked in by the dust collection device 20 moves from the dust collector 21 to the motor portion 3. The dust collection device 20 may separate the foreign substances contained in the air in a cyclone manner. The removal of foreign substances inside the air may mean that foreign substances are temporarily stored in the storage portion 210 included in the dust collector 21. The motor portion 3 may generate suction force such that the dust collector 21 sucks in air and stores foreign substances. However, the relationship between the motor portion 3 and the dust collector 21 is not limited to the above description.

The exemplary sizes of the vacuum cleaner 1 and dust collection device 20 and the performance of the motor portion 3 will be described below.

Referring back to FIGS. 1, 4 and 5, the dust collection device 20 according to an example embodiment may be a small-sized dust collection device 20. The vacuum cleaner 1 may be a small-sized vacuum cleaner 1. The small-sized vacuum cleaner 1 may be the vacuum cleaner 1 including the small-sized dust collection device 20. The small-sized dust collection device 20 may be the dust collection device 20 with a reduced diameter compared to existing ones. The small-sized vacuum cleaner 1 may be the vacuum cleaner 1 including the small-sized dust collection device 20. The small-sized vacuum cleaner 1 may be the vacuum cleaner 1 including the small-sized transfer portion 12. The small-sized dust collection device 20 may be the dust collection device 20 including the dust collector 21 with a reduced diameter. The small-sized dust collection device 20 may be a dust collection device with a reduced diameter of the motor portion 3. The small-sized transfer portion 12 may be the transfer portion 12 with a reduced diameter. The diameter of the dust collection device 20 and the diameter of the motor portion 3 may be the same. The diameter may be the diameter of a cross section perpendicular to the extension direction. The diameter may be the diameter of a cross section perpendicular to the x-axis direction. The diameter may be the diameter of a cross section perpendicular to the first direction. The diameter of the small-sized dust collection device 20 may be 80 mm or more and 110 mm or less. The diameter of the small-sized dust collection device 20 may be 90 mm or more and 100 mm or less. The diameter of the small-sized dust collection device 20 may be about 94 mm. However, the sizes of dust collection device 20 and vacuum cleaner 1 are not limited to the above description.

The motor portion 3 of the dust collection device 20 according to an example embodiment may be a high-performance motor portion 3. The high-performance motor portion 3 may provide strong suction force. When the motor portion 3 is the high-performance motor portion 3, if the dust collection device 20 is the small-sized dust collection device 20, the suction force may be prevented from decreasing. When the motor portion 3 is the high-performance motor portion 3, if the vacuum cleaner 1 is the small-sized vacuum cleaner 1, the suction force may be prevented from decreasing. However, the performance and role of the motor portion 3 are not limited to the above description.

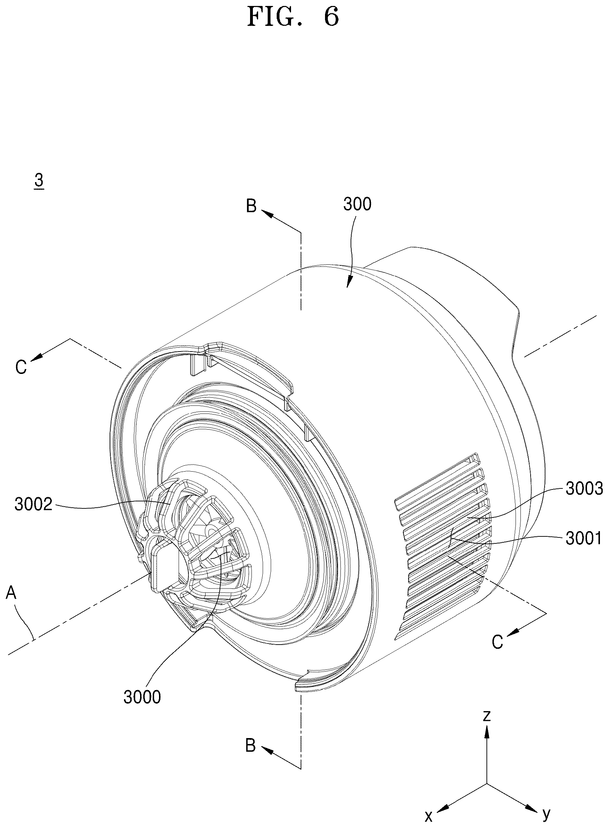

FIG. 6 is a perspective view of the motor portion 3 according to an example embodiment.

Referring to FIG. 6, the motor portion 3 according to an example embodiment may include a first grill 3002 covering the fourth suction portion 3000. The first grill 3002 may protect the fourth suction portion 3000. However, the function of the first grill 3002 is not limited to the above description.

The motor portion 3 according to an example embodiment may include a second grill 3003 covering the discharge portion 3001. The second grill 3003 may protect the discharge portion 3001. However, the function of the second grill 3003 is not limited to the above description.

According to an example embodiment, the motor portion 3 may be located around an axial direction A. The axial direction A may be a direction parallel to the x-axis. The axial direction A may be a direction parallel to the first direction. The axial direction A may be a direction in which the motor portion 3 sucks in air. However, a detailed direction of the axial direction A is not limited to the above description.

The fourth suction portion 3000 according to an example embodiment may be located in the axial direction A. The discharge portion 3001 may not be located in the axial direction A. The discharge portion 3001 may be located in a radial direction that intersects with the axial direction A. The discharge portion 3001 may be located in a second direction that intersects with the first direction. The second direction may be parallel to the y-axis. However, the arrangement relationship between the fourth suction portion 3000 and the discharge portion 3001 is not limited to the above description.

According to an example embodiment, the discharge portion 3001 may be provided in a plural number. The plurality of discharge portions 3001 may be arranged to face each other in the second direction. However, the number and arrangement of the discharge portion 3001 are not limited to the above description.

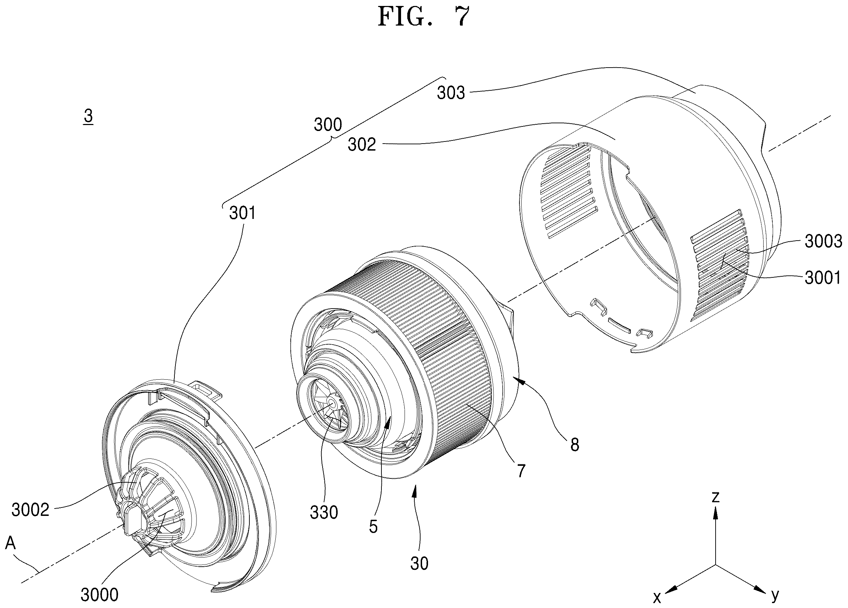

FIG. 7 is an exploded perspective view showing a housing 300 separated from the motor portion 3 according to an example embodiment.

Referring to FIGS. 6 and 7, the motor portion 3 according to an example embodiment may include the housing 300 and a motor assembly 30. The housing 300 may constitute an outer appearance of the motor portion 3. The housing 300 may cover the motor assembly 30. The housing 300 may constitute an outer appearance of the motor assembly 30. The housing 300 may support the motor assembly 30. The housing 300 may include the fourth suction portion 3000 and the discharge portion 3001.

The motor assembly 30 according to an example embodiment may provide suction force to the motor portion 3. The motor assembly 30 may generate suction force in the motor portion 3. The motor assembly 30 may provide suction force to the fourth suction portion 3000. The motor portion 3 may generate suction force in the fourth suction portion 3000.

The motor assembly 30 according to an example embodiment may include a fifth suction portion 330. The fifth suction portion may be disposed in the axial direction A. The fifth suction portion 330 may be located in the first direction. The motor assembly 30 may generate suction force through the fifth suction portion 330. The motor assembly 30 may provide suction force through the fifth suction portion 330. The motor assembly 30 may discharge the sucked-in air in a radial direction that intersects with the axial direction A. The motor assembly 30 may discharge the sucked-in air in a second direction that intersects with the first direction. However, a direction in which the motor assembly 30 sucks in and discharges air is not limited to the above description.

The motor assembly 30 according to an example embodiment may include a filter 7. The filter 7 may be configured to collect air discharged by the motor assembly 30. The filter 7 may be configured to collect foreign substances discharged to the discharge portion 3001. The filter 7 may cover the motor assembly 30 in a radial direction. The filter 7 may cover the motor assembly 30 from the outside around the axial direction A. The filter 7 may collect foreign substances contained in the air discharged from the motor assembly 30. The air sucked in by the motor assembly 30 may pass through the filter 7 when discharged. The foreign substances contained in the air discharged by the motor assembly 30 may be collected by the filter 7. However, the function of the filter 7 is not limited to the above description.

An upper housing 301 included in the housing 300 according to an example embodiment may be located to face the fifth suction portion 330. The upper housing 301 may include the fourth suction portion 3000. The fourth suction portion 3000 may be located to face the fifth suction portion 330. The upper housing 301 may cover an upper portion of the motor assembly 30. The upper housing 301 may protect an upper portion of the motor assembly 30. The upper portion of the motor assembly 30 may be at a position in a direction in which the fifth suction portion is located. However, the function and arrangement of the upper housing 301 are not limited to the above description.

A lower housing 303 provided in the housing 300 according to an example embodiment may be located to face the upper housing 301. The lower housing 303 may cover a lower portion of the motor assembly 30. However, the function and arrangement of the lower housing 303 are not limited to the above description.

A side housing 302 provided in the housing 300 according to an example embodiment may connect the upper housing 301 to the lower housing 303. The side housing 302 may cover the filter 7. The side housing 302 may cover a side portion of the motor assembly 30. The side housing 302 may cover the motor assembly 30 in a radial direction. However, the function and arrangement of the side housing 302 are not limited to the above description.

The side housing 302 according to an example embodiment may include the discharge portion 3001. The side housing 302 may cover the motor assembly 30 in a radial direction. The side housing 302 may cover the motor assembly 30 from the outside around the axial direction A. The air discharged from the motor assembly 30 may pass through the filter 7 and be discharged to the discharge portion 3001 of the side housing 302. The air discharged from the motor assembly 30 may move along an inner wall of the side housing 302. The air discharged from the motor assembly 30 may move along the inner wall of the side housing 302 toward the discharge portion 3001. The side housing 302 may provide an air flow path such that air discharged from the motor assembly 30 is discharged to the discharge portion 3001. However, the function and arrangement of the side housing 302 are not limited to the above description.

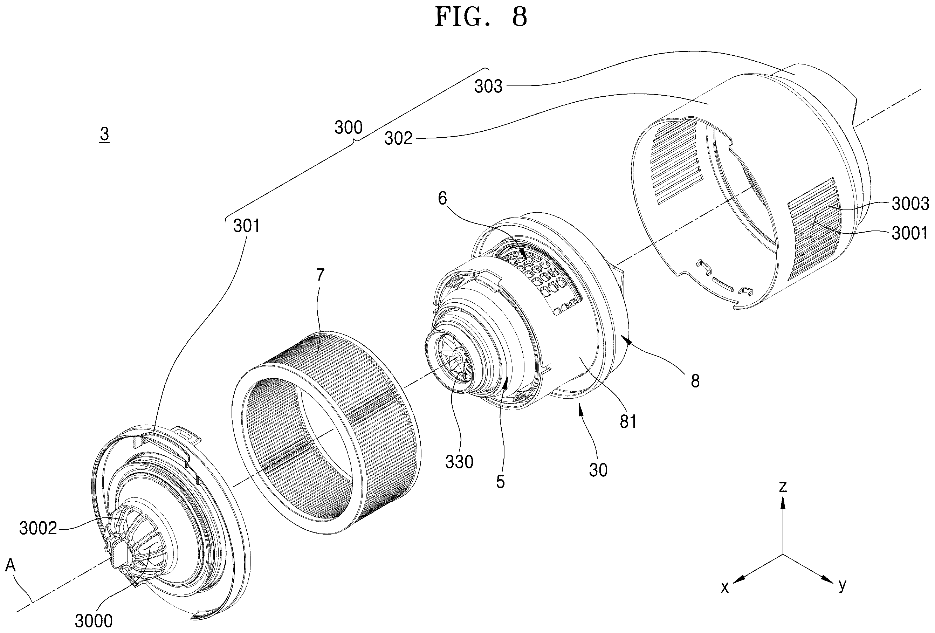

FIG. 8 is an exploded perspective view illustrating the filter 7 further separated from the motor assembly 30 of FIG. 7 according to an example embodiment.

Referring to FIGS. 7 and 8, the motor assembly 30 according to an example embodiment may include a filter support 8 disposed inside the filter 7. The filter support 8 may support the filter 7 within the filter 7. The filter support 8 may be located to support the filter 7 between the filter 7 and a support frame 6. However, the function and arrangement of the filter support 8 are not limited to the above description.

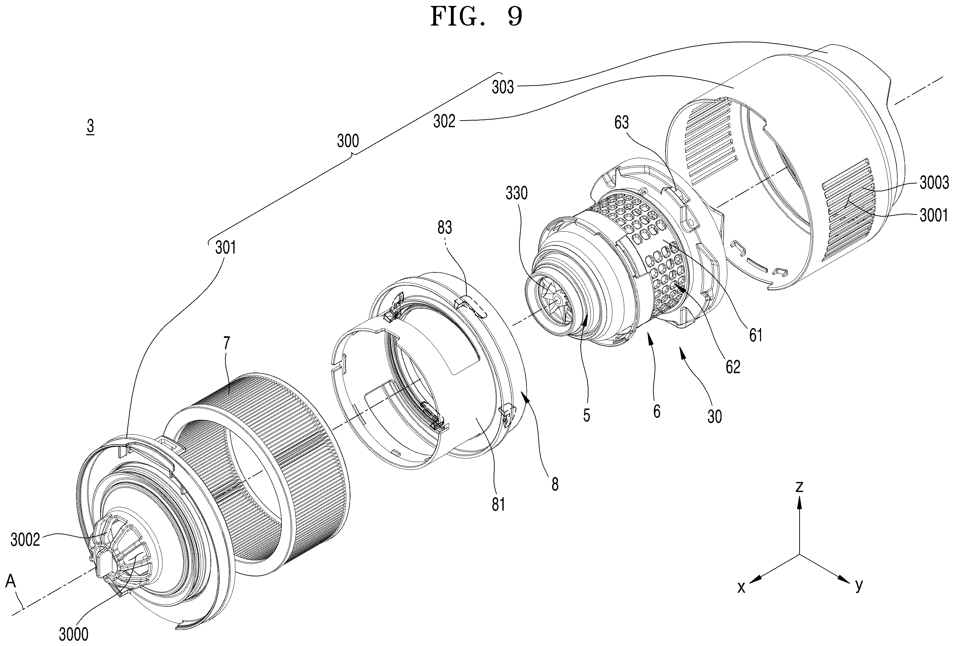

FIG. 9 is an exploded perspective view showing the filter support 8 further separated from the motor assembly 30 of FIG. 8.

Referring to FIG. 9, the motor assembly 30 according to an example embodiment may include the support frame 6. The support frame 6 may cover the motor assembly 30 in a radial direction. The support frame 6 may cover the motor assembly 30 from the outside around the axial direction A.

The motor assembly 30 according to an example embodiment may discharge the sucked-in air through the support frame 6. The filter 7 may be located between the support frame 6 and the housing 300. Air discharged through the support frame 6 may pass through the filter 7 and be discharged to the discharge portion 3001 of the housing 300.

The support frame 6 according to an example embodiment may include a plurality of discharge holes 62 arranged along an outer circumferential surface 61. The plurality of discharge holes 62 may be disposed in the radial direction of the motor assembly 30. The plurality of discharge holes 62 may be disposed in a direction toward the side surface of the motor assembly 30. However, the arrangement of the discharge holes 62 is not limited to the above description.

The discharge hole 62 according to an example embodiment may provide a flow path for the air discharged by the motor assembly 30. The discharge hole 62 may be a passage through which the air discharged from the motor assembly 30 is discharged. The air discharged from the motor assembly 30 may be discharged through the discharge hole 62. However, the function of the discharge hole 62 is not limited to the above description.

The exemplary performance and noise prevention of the motor assembly 30 will be described below.

Referring back to FIGS. 7 to 9, the motor assembly 30 of the motor portion 3 according to an example embodiment may be the high-performance motor assembly 30. The high-performance motor assembly 30 may provide strong suction force. When the motor assembly 30 is the high-performance motor assembly 30, noise prevention may be required. However, the performance and noise occurrence of the motor assembly 30 are not limited to the above description.

The noise of the motor assembly 30 according to an example embodiment may transferred to the outside through the plurality of discharge holes 62. The noise of the motor assembly 30 may be transferred to the outside through the air discharged through the plurality of discharge holes 62.

The plurality of discharge holes 62 according to an example embodiment may be arranged radially. The plurality of discharge holes 62 may be arranged radially with respect to the axial direction A. The lengths of the flow paths through which the air discharged from the plurality of discharge holes 62 is discharged to the discharge portion 3001 may be different from each other.

Among the plurality of discharge holes 62 according to an example embodiment, there may be the discharge hole 62 located to face the discharge portion 3001. Among the plurality of discharge holes 62, the discharge hole 62 located to face the discharge portion 3001 may be adjacent to the discharge portion 3001. Among the plurality of discharge holes 62, the discharge hole 62 located to face the discharge portion 3001 may overlap the discharge portion 3001.

The filter support 8 according to an example embodiment may include a barrier 81. The barrier 81 may cover, from the outside, the discharge hole 62 that is from among the plurality of discharge holes 62 and located to face the discharge portion 3001. The barrier 81 may block a space between the discharge portion 3001 and the discharge hole 62 located to face the discharge portion 3001 among the plurality of discharge holes 62. The barrier 81 may prevent air discharged from the discharge hole 62 located to face the discharge portion 3001 from being discharged directly to the discharge portion 3001. The barrier 81 may prevent noise passing through the discharge hole 62 located to face the discharge portion 3001 from being discharged directly to the discharge portion 3001.

The barrier 81 may provide a bypass flow path for air discharged from the discharge hole 62 located to face the discharge portion 3001. The barrier 81 may provide a bypass path for noise passing through the discharge hole 62 located to face the discharge portion 3001. The air discharged from the discharge hole 62 located to face the discharge portion 3001 may bypass the barrier 81 before being discharged to the discharge portion 3001. Noise passing through the discharge hole 62 located to face the discharge portion 3001 may bypass the barrier 81 before being discharged to the discharge portion 3001.

The barrier 81 may prevent noise occurring in the motor assembly 30 from being directly discharged to the discharge portion 3001. When the noise discharged by the motor assembly 30 is bypassed through the barrier 81, the noise may be reduced. The barrier 81 may reduce noise occurring in the motor assembly 30. However, the arrangement and function of the barrier 81 are not limited to the above description.

The barrier 81 according to an example embodiment may be located at a certain interval from the discharge hole 62. When the barrier 81 is located at a certain interval from the discharge hole 62, the barrier 81 may not block a flow path of air discharged from the discharge hole 62. The interval between the barrier 81 and the discharge hole 62 may be 4 mm or more and 6 mm or less. However, the distance relationship between the barrier 81 and the discharge hole 62 is not limited to the above description.

Referring back to FIGS. 8 and 9, the filter support 8 according to an example embodiment may be coupled to the support frame 6. The filter support 8 may be supported on the support frame 6. At least one fifth protrusion 83 may be located on one of the filter support 8 and the support frame 6, and at least one fifth groove 63 may be located on the other of the filter support 8 and the support frame 6. The filter support 8 may include the fifth protrusion 83. The support frame 6 may include the fifth groove 63. The fifth protrusion 83 of the filter support 8 may be coupled to the fifth groove 63 of the support frame 6. However, the coupling relationship between the filter support 8 and the support frame 6 is not limited to the above description.

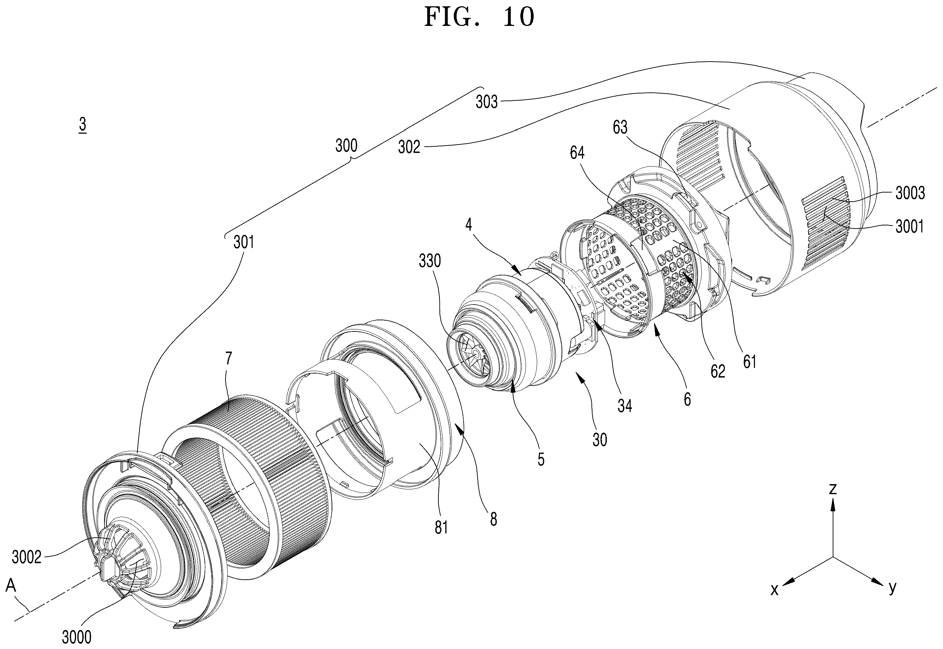

FIG. 10 is an exploded perspective view showing the support frame 6 further separated from the motor assembly 30 of FIG. 9.

Referring to FIG. 10, the support frame 6 according to an example embodiment may support the motor assembly 30 from the outside of the motor assembly 30. The motor assembly 30 may be fixed to the support frame 6. The support frame 6 may be fixed to the housing 300. The support frame 6 may be fixed to the lower housing 303. However, the function of the support frame 6 is not limited to the above description.

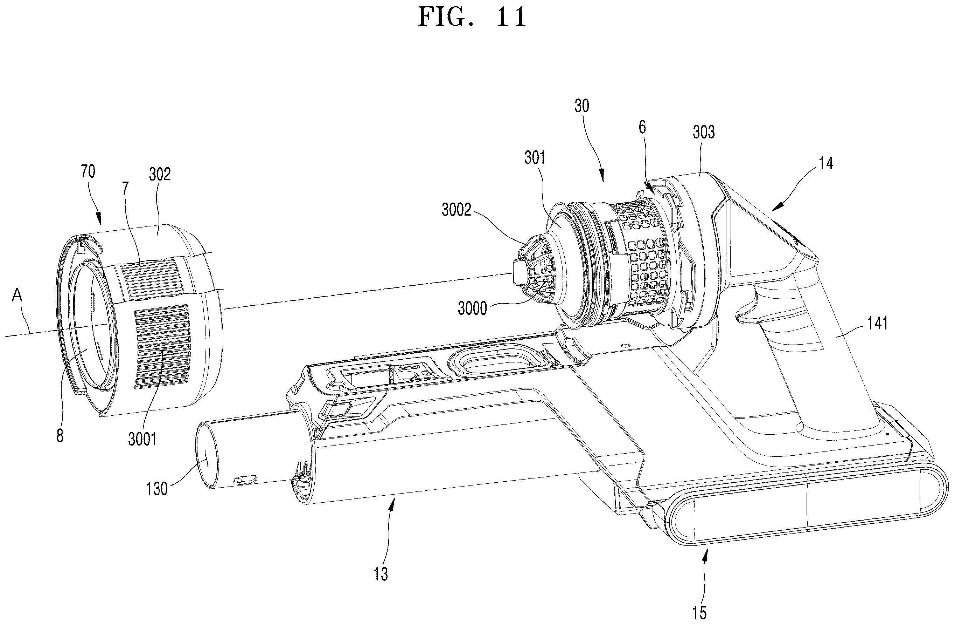

FIG. 11 is an exploded perspective view showing separation of a filter assembly 70 according to an example embodiment.

Referring to FIGS. 7 to 11, the filter assembly 70 may be separated from the motor assembly 30 according to an example embodiment. The filter assembly 70 may include the filter support 8, a filter, and a side frame 302. The filter support 8 may support the filter 7 within the filter 7. The side frame 302 may cover the filter 7 from the outside of the filter 7. The user may separate or couple the filter assembly 70 from or to a motor frame 30 as needed. However, the separation and coupling of the filter assembly 70 is not limited to the above description.

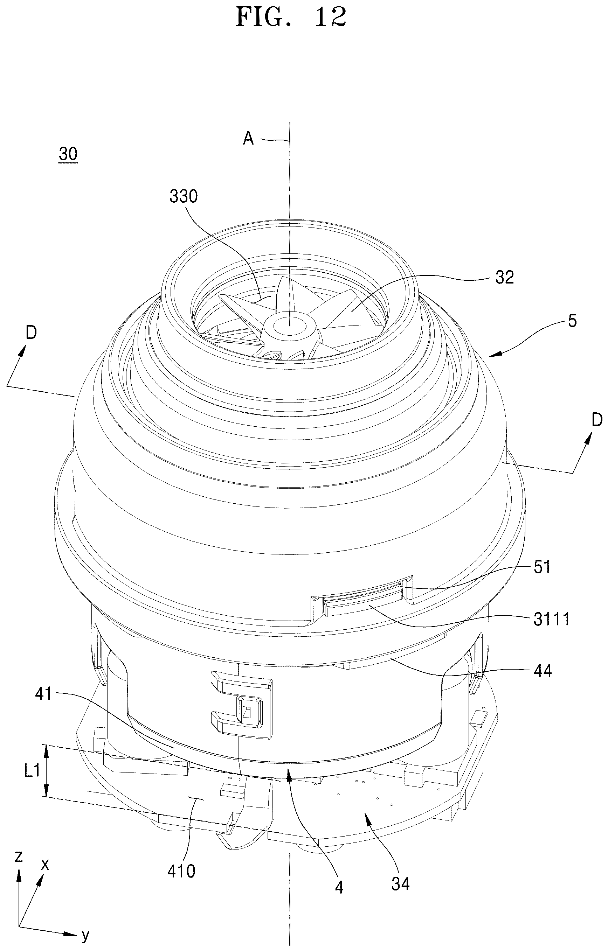

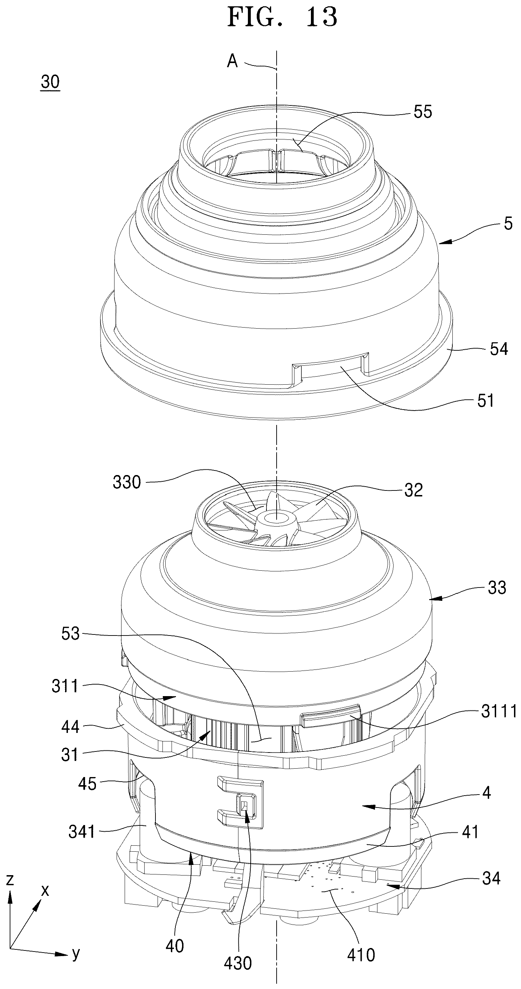

FIG. 12 is a perspective view of the motor assembly 30 viewed from a different angle according to an example embodiment. FIG. 13 is an exploded perspective view showing a guide cover 5 separated from the motor assembly 30 of FIG. 12 according to an example embodiment.

Referring to FIGS. 12 and 13, the motor assembly 30 according to an example embodiment may include a fan motor 31, an impeller 32, and the fifth suction portion 330.

The fan motor 31 may supply rotation force to the impeller 32.

The impeller 32 may be rotated by the fan motor 31. The impeller 32 may be rotated by the fan motor 31 to generate suction force in the motor assembly 30. The impeller 32 may be rotated by the fan motor 31 to generate suction force in the fifth suction portion 330.

The motor assembly 30 may generate suction force through the fifth suction portion 330. The motor assembly 30 may provide suction force through the fifth suction portion 330. The motor assembly 30 may suck in air through the fifth suction portion 330. The motor assembly 30 may suck in air in the axial direction A. The axial direction A may be the axial direction A of the impeller 32.

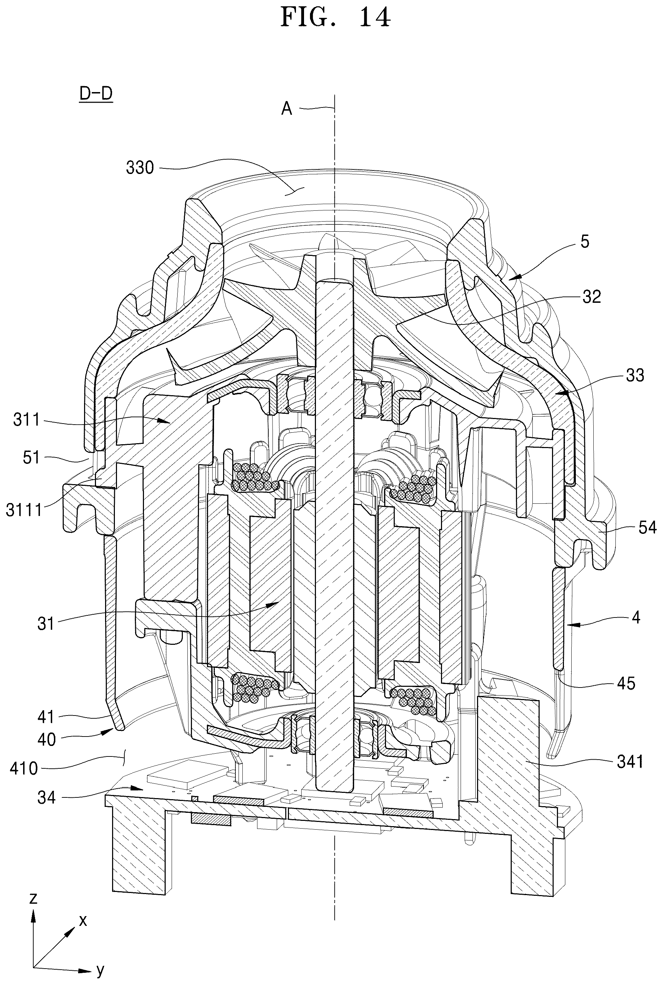

FIG. 14 is a cross-sectional perspective view of a cross section of the motor assembly 30 of FIG. 12.

Referring to FIGS. 10 and 12 to 14, the motor assembly 30 according to an example embodiment may include a control board 34. The control board 34 may control the operation of the motor assembly 30. The control board 34 may control the operation of the fan motor 31. The control board 34 may supply power to the fan motor 31. The control board 34 may be disposed below the fan motor 31. A lower portion of the fan motor 31, in which the control board 34 is disposed, may be toward the fan motor in the axial direction A in which the impeller 32 is connected to the fan motor 31. The fan motor 31 may be located between the impeller 32 and the control board 34. However, the arrangement direction of the control board 34 is not limited to the above description.

The fan motor 31 may be located above the control board 34. The fan motor 31 may be located above the control board 34. The control board 34 may be supported on the support frame 6. The control board 34 may be supported on the lower housing 303. The control board 34 may be supported on the filter support 8. However, the function and arrangement of the control board 34 are not limited to the above description.

The motor assembly 30 according to an example embodiment may include a first guide 33. The first guide 33 may cover the impeller 32. The first guide 33 may protect the impeller 32. The first guide 33 may be located above the control board 34. The first guide 33 may be located above the fan motor 31. However, the arrangement of the first guide 33 is not limited to the above description.

The first guide 33 according to an example embodiment may guide sucked-in air in the axial direction A of the impeller 32 along a flow path. The first guide 33 may guide the sucked-in air in the axial direction A of the impeller 32 along the air flow path to be directed to the control board 34. However, the arrangement and function of the first guide 33 are not limited to the above description.

The motor assembly 30 according to an example embodiment may include a second guide 4. The second guide 4 may cover the fan motor 31. The second guide 4 may protect the fan motor 31. The second guide 4 may guide air along an air flow path. The second guide 4 may guide the air along the air flow path to be directed toward the control board 34. The second guide 4 may guide the air sucked in by the motor assembly 30 along the air flow path such that the air may reach the control board 34. The second guide 4 may be located below the first guide 33. The second guide 4 may be located between the first guide 33 and the control board 34. The second guide 4 may be located above the control board 34. However, the function and arrangement of the second guide 4 are not limited to the above description.

The second guide 4 according to an example embodiment may be located apart from the first guide 33. When the second guide 4 according to an example embodiment is located apart from the first guide 33, the fan motor 31 may be exposed to the outside. However, the arrangement relationship of the first guide 33 and the second guide 4 is not limited to the above description.

The motor assembly 30 according to an example embodiment may include a guide gap 53 defined by a space between the first guide 33 and the second guide 4. The guide gap 53 may be the space between the first guide 33 and the second guide 4. The fan motor 31 may be exposed to the outside through the guide gap 53. However, whether there is a space between the first guide 33 and the guide and whether the fan motor 31 is exposed are not limited to the above description. For example, there may be no space between the first guide 33 and the second guide 4. For example, the first guide 33 and the second guide 4 may be one body.

The motor assembly 30 according to an example embodiment may include the guide cover 5 surrounding the first guide 33. The guide cover 5 may cover the first guide 33. The guide cover 5 may surround an outer surface of the first guide 33. The guide cover 5 may be disposed on the first guide 33. The guide cover 5 may be disposed on a surface of the first guide 33. However, the arrangement of the guide cover 5 is not limited to the above description.

The guide cover 5 according to an example embodiment may include an accommodation portion 54 at a lower end. The accommodation portion 54 may be a portion at which the guide cover 5 comes into contact with the second guide 4. The accommodation portion 54 may be a portion at which the guide cover 5 is accommodated on an upper end of the second guide 4. The accommodation portion 54 may be a portion at which the guide cover 5 is supported by the upper end of the second guide 4. However, the arrangement of the accommodation portion 54 is not limited to the above description.

The guide cover 5 according to an example embodiment may cover a space between the first guide 33 and the second guide 4. The guide cover 5 may cover the guide gap 53. The guide cover 5 may seal the space between the first guide 33 and the second guide 4. The guide cover 5 may guide the air sucked in by the motor assembly 30 along the air flow path to be directed toward the control board 34. The guide cover 5 may provide the air flow path such that the air sucked in by the motor assembly 30 may pass through the first guide 33 and be directed toward the second guide 4. The guide cover 5 may prevent air sucked in by the motor assembly 30 from leaking out through the guide gap 53. However, the function of the guide cover 5 is not limited to the above description.

The fan motor 31 of the motor assembly 30 according to an example embodiment may be a high-performance fan motor 31. The high-performance fan motor 31 may provide high output to the impeller 32 such that the motor assembly 30 may provide strong suction force. The high-performance fan motor 31 may provide a high rotation speed to the impeller 32 such that the motor assembly 30 may provide strong suction force. The rotation speed of the fan motor 31 may be 60,000 RPM or more and 138,000 RPM or less. The power consumption of the fan motor 31 may be 55 W or more and 580 W or less. When the fan motor 31 is a high-performance fan motor 31, it may be necessary to reduce the noise occurring during an operation of the fan motor 31. However, the performance, rotation speed, output, and noise occurrence of the fan motor 31 are not limited to the above description.

The first guide 33 according to an example embodiment may be located adjacent to the impeller 32. The impeller 32 may produce noise and vibration through rotation. The impeller 32 may transfer noise and vibration to the first guide 33. The first guide 33 may receive noise and vibration by the impeller 32.

The guide cover 5 according to an example embodiment may include an elastic material. The guide cover 5 may prevent the first guide 33 from transferring noise and vibration to the outside. The guide cover 5 may alleviate vibration of the first guide 33. The guide cover 5 may alleviate vibration of the first guide 33 through elastic deformation. The guide cover 5 may function as a damper for vibration of the first guide 33. The guide cover 5 may alleviate noise of the first guide 33. However, the function of the guide cover 5 is not limited to the above description.

The guide cover 5 according to an example embodiment may include an opening 55. The guide cover 5 may include the opening 55 through which the fifth suction portion 330 is exposed. The guide cover 5 may not reduce the suction force generated by the motor assembly 30. The guide cover 5 may reduce noise and vibration of the motor assembly 30. However, the function of the guide cover 5 is not limited to the above description.

Referring back to FIGS. 10 and 13, the second guide 4 according to an example embodiment may include a fixing protrusion 44. The support frame 6 may include a fixing groove 64. The second guide 4 may be supported on the support frame 6. The fixing protrusion 44 may be accommodated in the fixing groove 64. The support frame 6 may support the second guide 4. The support frame 6 may cover the second guide 4. However, the support relationship between the second guide 4 and the support frame 6 is not limited to the above description.

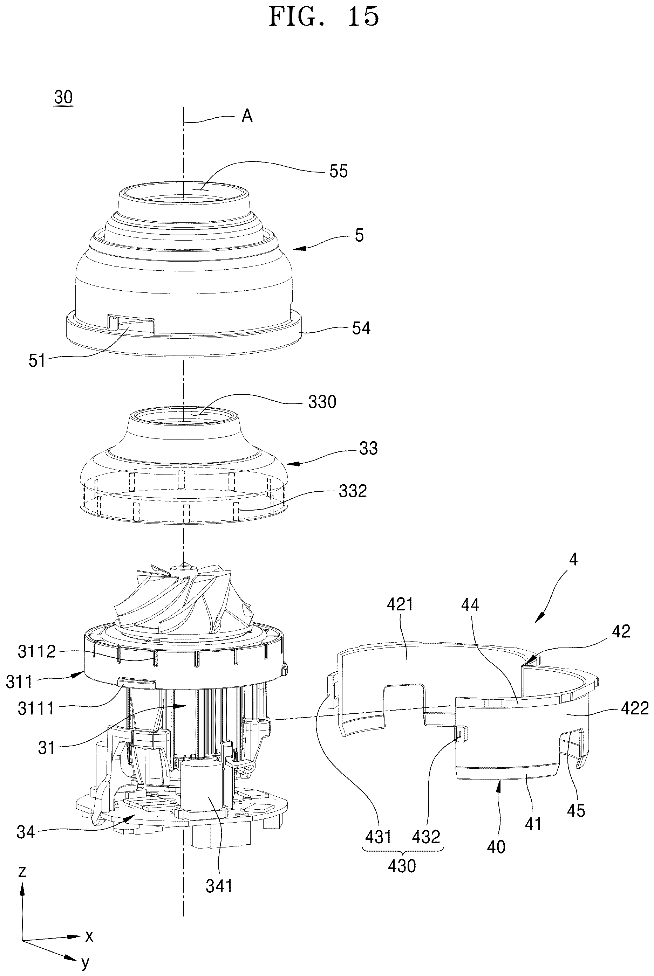

FIG. 15 is an exploded perspective view of a state in which the first guide 33 and the second guide 4 are separated from the motor assembly 30 of FIG. 12 viewed from different directions according to an example embodiment.

Referring to FIGS. 12 to 15, the fan motor 31 according to an example embodiment may include a motor frame 311. The motor frame 311 may connect the fan motor 31 to the impeller 32. The motor frame 311 may be located between the fan motor 31 and the impeller 32. The motor frame 311 may support the fan motor 31.

The motor frame 311 according to an example embodiment may include a second protrusion 3111. The guide cover 5 may include a second groove 51. The guide cover 5 may be fixed to the motor frame 311. The second protrusion 3111 may be fastened to the second groove 51. The guide cover 5 may be fixed to the motor frame 311 by fastening the second protrusion 3111 to the second groove 51. However, the fixing of the guide cover 5 and the motor frame 311 is not limited to the above description.

The motor frame 311 according to an example embodiment may include a third protrusion 3112. The first guide 33 may include a third groove 332. The first guide 33 may be fixed to the motor frame 311. The third protrusion 3112 may be fastened to the third groove 332. The first guide 33 may be fixed to the motor frame 311 by fastening the third protrusion 3112 to the third groove 332. However, the fixing of the first guide 33 and the motor frame 311 is not limited to the above description.

Referring back to FIGS. 10, 12 to 14, an end 40 of the second guide 4 according to an example embodiment may be located to face the control board 34. The second guide 4 may be located apart from the control board 34. The second guide 4 may be located apart from the control board 34 at a certain interval. An interval L1 between the second guide 4 and the control board 34 may be 4 mm or more. The interval L1 between the second guide 4 and the control board 34 may be 5 mm or more. The interval L1 between the second guide 4 and the control board 34 may be 20 mm or less. The interval L1 between the second guide 4 and the control board 34 may be 10 mm or less. The interval L1 at which the second guide 4 is spaced apart from the control board 34 may be the interval L1 at which the end 40 of the second guide 4 is spaced apart from the control board 34. However, the positional relationship between the second guide 4 and the control board 34 is not limited to the above description.

The motor assembly 30 according to an example embodiment may include a lower gap 410. The lower gap 410 may be a gap defined by a space between the control board 34 and the second guide 4. The space between the control board 34 and the second guide 4 may define the lower gap 410. The lower gap 410 may be a passage through which air sucked in by the motor assembly 30 is discharged. The air sucked in by the motor assembly 30 may flow into the lower gap 410 by the control board 34. The control board 34 may discharge the air sucked in by the motor assembly 30 into the lower gap 410. When the lower gap 410 is equal to or greater than a certain interval, the air sucked in by the motor assembly 30 may be discharged smoothly through the lower gap 410. When the length L1 of the lower gap 410 is equal to or greater than a certain length, the air sucked in by the motor assembly 30 may be discharged smoothly. When the length L1 of the lower gap 410 is equal to or greater than 4 mm, the air sucked in by the motor assembly 30 may be discharged smoothly through the lower gap 410. When the length L1 of the lower gap 410 is equal to or greater than 5 mm, the air sucked in by the motor assembly 30 may be discharged smoothly through the lower gap 410. However, the length L1 of the lower gap 410 and the discharge of air are not limited to the above description.

The control board 34 according to an example embodiment may change a flow direction of air sucked in by the motor assembly 30 from the axial direction A to a radial direction. The direction in which the air sucked in by the motor assembly 30 flows may be radially refracted from the control board 34. The radial direction may be a direction that intersects with the axial direction A. The radial direction may be perpendicular to the axial direction A. However, the flow direction of the air sucked in by the motor assembly 30 is not limited to the above description.

The relationship between cooling provided to the second guide 4 and the control board 34 will be described exemplarily below.

When the fan motor 31 according to an example embodiment is a high-performance fan motor 31, the amount of power that the control board 34 needs to supply to the fan motor 31 may be large. When the fan motor 31 is the high-performance fan motor 31, the amount of heat generated in the control board 34 may be large. When the amount of heat generated in the control board 34 is large, cooling may need to be provided to the control board 34. However, a degree of heat generated from the control board 34 is not limited to the above description. For example, a need for cooling of the control board 34 and the performance of the fan motor 31 may be unrelated.

The second guide 4 according to an example embodiment may provide cooling to the control board 34. When the air sucked in by the motor assembly 30 reaches the control board 34 through the second guide 4, the control board 34 may be cooled. When the second guide 4 guides the flow of air toward the control board 34, the control board 34 may be cooled. The air sucked in by the motor assembly 30 may cool the control board 34. The air sucked in by the motor assembly 30 may cool the control board 34 by reaching the control board 34 through the flow path along which air is guided by the second guide 4. However, the relationship between the cooling of the control board 34 and the air sucked in by the motor assembly 30 is not limited to the above description.

The second guide 4 according to an example embodiment may include a nozzle portion 41 at the end 40. The nozzle portion 41 may be a portion having an area that reduces toward the control board 34. The nozzle portion 41 may be a portion that increases the speed of air directed toward the control board 34. The nozzle portion 41 may be a portion that increases the pressure of air directed toward the control board 34. The nozzle portion 41 may be a portion that changes the direction of air flow toward the control board 34.

The nozzle portion 41 according to an example embodiment may be configured to condense the air sucked in by the motor assembly 30. The nozzle portion 41 may have a gradient of a certain angle D with respect to the second guide 4. The nozzle portion 41 may have a gradient of a certain angle D with respect to the end 40 of the second guide 4. The nozzle portion 41 may have a gradient in the axial direction A. The nozzle portion 41 may have a shape that is bent in a direction in which the diameter of the second guide 4 decreases. The angle D of the gradient of the nozzle portion 41 may be an angle D formed between the second guide 4 and a straight line connecting two ends of the nozzle portion 41. The angle D of the gradient of the nozzle portion 41 may be an angle D formed between the axial direction A and the straight line connecting two ends of the nozzle portion 41. However, the shape of the nozzle portion 41 is not limited to the above description. For example, the nozzle portion 41 may have a curved gradient.

The air sucked in by the motor assembly 30 according to an example embodiment may flow along the inner surface of the second guide 4 to the control board 34. The air sucked in by the motor assembly 30 may be refracted by the nozzle portion 41. The air sucked in by the motor assembly 30 may have a flow speed increased by the nozzle portion 41. The air sucked in by the motor assembly 30 may have a pressure increased by the nozzle portion 41. The air sucked in by the motor assembly 30 may be condensed by the nozzle portion 41. The air sucked in by the motor assembly 30 may have a density increased by the nozzle portion 41. However, the relationship between a flow of air sucked in by the motor assembly 30 and the nozzle portion 41 is not limited to the above description.

The nozzle portion 41 according to an example embodiment may provide a flow of air having a high degree of cohesion to the control board 34. The nozzle portion 41 may provide a flow of air having a high density to the control board 34. When a flow of air having a high cohesion is provided to the control board 34, the cooling degree of the control board 34 may be high. When a flow of air having a high density is provided to the control board 34, the cooling degree of the control board 34 may be high. The nozzle portion 41 may guide a flow of air to provide a high cooling degree to the control board 34. However, the relationship between the cooling of the control board 34 and the nozzle portion 41 is not limited to the above description.

The relationship between the second guide 4 and noise reduction of the motor assembly 30 will be described exemplarily below.

When the fan motor 31 according to an example embodiment is the high-performance fan motor 31, noise prevention may be required. However, the performance and noise occurrence of the motor assembly 30 are not limited to the above description.

The noise from the motor assembly 30 according to an example embodiment may be transferred to the outside through the lower gap 410. The noise from the motor assembly 30 may be transferred to the outside through the air discharged through the lower gap 410. When the noise from the motor assembly 30 does not reach the control board 34 but is transferred through the lower gap 410, the noise may be excessive. When the noise of the motor assembly 30 transferred toward the control board 34 spreads widely in a radial direction, the noise transferred to the outside may be excessive.

The nozzle portion 41 according to an example embodiment may prevent noise of the motor assembly 30, transferred toward the control board 34, from spreading widely in a radial direction. The nozzle portion 41 may prevent noise from the motor assembly 30 from being transferred to the lower gap 410. The nozzle portion 41 may induce the noise of the motor assembly 30 to hover over the control board 34. The noise of the motor assembly 30, which hovers over the control board 34, may hover between the components arranged on the control board 34. The noise of the motor assembly 30 may be attenuated by the components arranged on the control board 34. The noise of the motor assembly 30 may be dampened by the components arranged on the control board 34. The nozzle portion 41 may reduce the noise of the motor assembly 30. However, the relationship between the noise of the nozzle portion 41 and the motor assembly 30 is not limited to the above description.

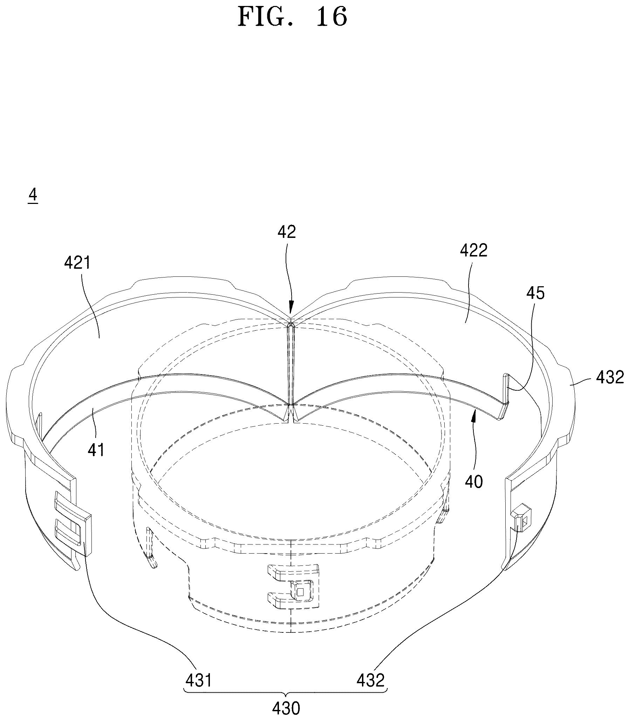

FIG. 16 is a perspective view illustrating an operation of a clip portion 430 of the second guide 4 according to an example embodiment.

Referring to FIGS. 15 and 16, the second guide 4 according to an example embodiment may be assembled to the fan motor 31. The second guide 4 may be assembled to surround the fan motor 31. The second guide 4 may be assembled to the fan motor 31 by being fastened to the outside of the fan motor 31. The second guide 4 may be fastened to the outside of the fan motor 31. The second guide 4 may be fastened to surround the fan motor 31. The second guide 4 may be fixed to the fan motor 31 by being fixedly located outside the fan motor 31. However, the assembly of the second guide 4 is not limited to the above description.

The second guide 4 according to an example embodiment may include an avoidance portion 45. The second guide 4 may have a concave structure such that the avoidance portion 45 avoids an interference member 341 of the control board 34. The interference member 341 may be an electrical device disposed on the control board 34. The interference member 341 may have a structure protruding toward the fan motor 31 on the control board 34. The second guide 4 may include the avoidance portion 45 having a concave structure to prevent interference with the interference member 341 of the control board 34. When the second guide 4 is assembled to the fan motor 31, the second guide 4 may not interfere with the interference member 341 of the control board 34. However, the structure and arrangement of the interference member 341 and the avoidance portion 45 are not limited to the above description.

The second guide 4 according to an example embodiment may include the clip portion 430. The clip portion 430 may be configured to fasten two side ends 43 of the second guide 4. The clip portion 430 may fix the two side ends 43 of the second guide 4. The clip portion 430 may include a fourth groove 431 and a fourth protrusion 432. The fourth protrusion 432 may be inserted into the fourth groove 431. The fourth protrusion 432 may be fixed to the fourth groove 431. The fourth protrusion 432 and the fourth groove 431 may be fixed through hook coupling. The fourth protrusion 432 may be located at one side end 43 of the second guide 4, and the fourth groove 431 may be located on the other side end 43 of the second guide 4. However, the function and structure of the side ends 43 of the second guide 4 are not limited to the above description.

The second guide 4 according to an example embodiment may include a link 42. The link 42 may be flexible. The second guide 4 may be curved based on the link 42. The second guide 4 may be bent based on the link 42. The second guide 4 may be divided into a first part 421 and a second part 422 based on the link 42. The first part 421 and the second part 422 may rotate around the link 42. The link 42 may provide a rotatable structure such that an end of the first part 421 and an end of the second part 422 may be in contact with each other. The fourth groove 431 may be located at the end of the first part 421. The fourth protrusion 432 may be located at the end of the second part 422. However, the function and structure of the link 42 are not limited to the above description.

The clip portion 430 of the second guide 4 according to an example embodiment may fasten the two side ends 43 of the second guide 4 as the link 42 is curved. However, the curving of the link 42 and the fastening of the clip portion 430 are not limited to the above description.

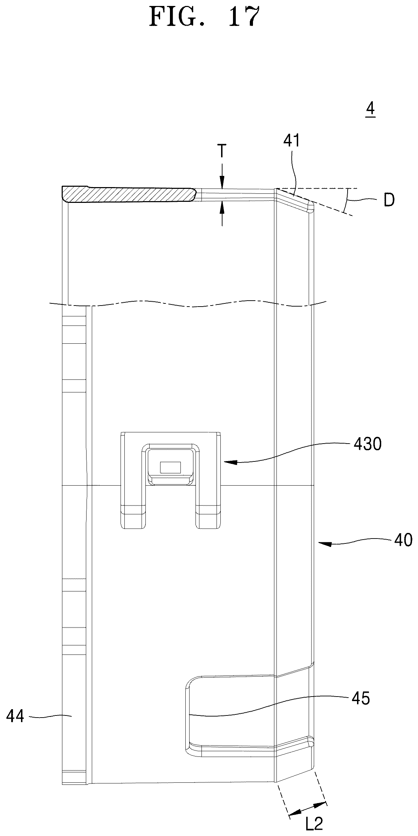

FIG. 17 is a partial cross-sectional view of the second guide 4 according to an example embodiment.

Referring to FIGS. 15 to 17, the second guide 4 according to an example embodiment may have a certain thickness T. The thickness T of the second guide 4 may be 1 mm or more and 3 mm or less. The thickness T of the second guide 4 may be 1.5 mm or more and 2.5 mm or less. However, the thickness T of the second guide 4 is not limited to the above description.

The nozzle portion 41 of the second guide 4 according to an example embodiment may have a certain length L2. The length L2 of the nozzle portion 41 may be 1 mm or more. The length L2 of the nozzle portion 41 may be 1.5 mm or more. The length L2 of the nozzle portion 41 may be 2 mm or more. The length L2 of the nozzle portion 41 may be 3 mm or more. The length L2 of the nozzle portion 41 may be 10 mm or less. The length L2 of the nozzle portion 41 may be 5 mm or less. However, the length L2 of the nozzle portion 41 is not limited to the above description.

The nozzle portion 41 of the second guide 4 according to an example embodiment may have a gradient of a certain angle D. The gradient of the certain angle D of the nozzle portion 41 may be 5° or more and 60° or less. The gradient of the certain angle D of the nozzle portion 41 may be 10° or more and 40° or less. The gradient of the certain angle D of the nozzle portion 41 may be 15° or more and 30° or less. However, the gradient of the certain angle D of the nozzle portion 41 is not limited to the above description.

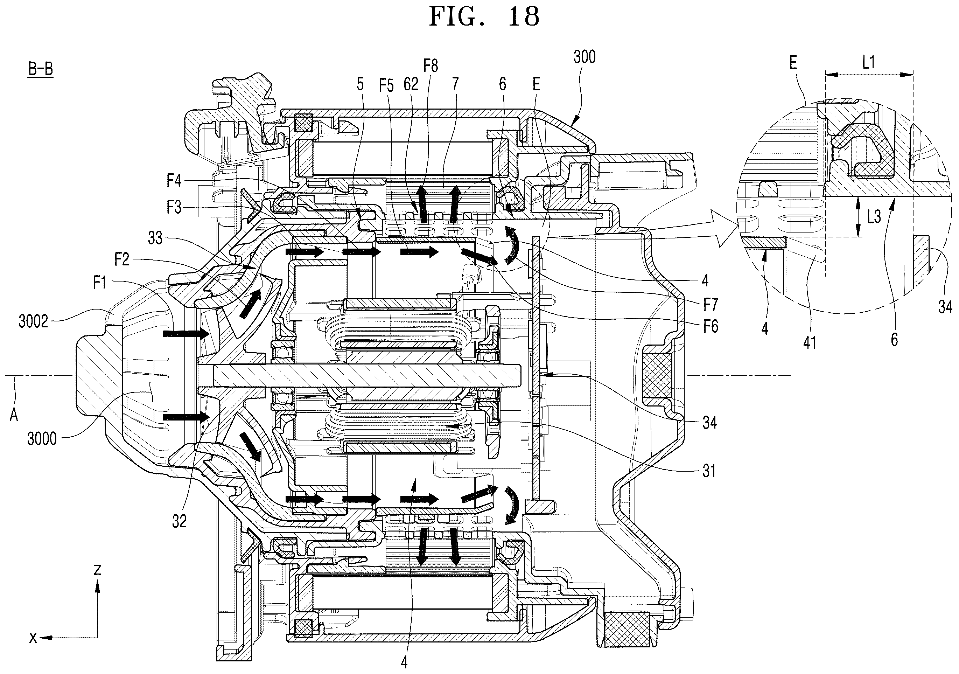

FIG. 18 is a cross-sectional view of the motor portion 3 of FIG. 6 viewed in B-B direction according to an example embodiment.

**EP 4 746 263 A1**

Referring to FIGS. 6, 10, 12, 13, 14, 17, and 18, the motor portion 3 according to an example embodiment may be configured to suck in air from the fourth suction portion 3000 and discharge the air to the discharge portion 3001. The motor portion 3 may provide an internal flow path to allow the sucked-in air to flow. The air sucked in by the motor portion 3 from the fourth suction portion 3000 may flow through the internal flow path and be discharged to the discharge portion 3001. However, the flow of air sucked in by the motor portion 3 is not limited to the above description.

The internal flow path of the motor portion 3 according to an example embodiment may include a first flow path F1 passing through the fourth suction portion 3000 and directed toward the impeller 32. The internal flow path may include a second flow path F2 passing through the impeller 32 and directed toward the first guide 33. The internal flow path may include a third flow path F3 passing through the first guide 33 and directed toward the guide gap 53. The internal flow path may include a fourth flow path F4 passing through the guide gap 53 and directed toward the second guide 4. The internal flow path may include a fifth flow path F5 passing through the second guide 4 and directed toward the control board 34. The internal flow path may include a sixth flow path F6 passing through the end 40 of the second guide 4 and directed toward the control board 34. The internal flow path may include a seventh flow path F7 passing through the control board 34 and directed toward the discharge hole 62. The internal flow path may include an eighth flow path F8 passing through the discharge hole 62 and directed toward the filter 7. However, the internal flow path of the motor portion 3 is not limited to the above description.

The sixth flow path F6 according to an example embodiment may pass through the end 40 of the second guide 4 and be directed toward the control board 34. The internal flow path may include the sixth flow path F6 passing through the nozzle portion 41 of the second guide 4 and directed toward the control board 34. The sixth flow path F6 may pass through the nozzle portion 41 of the second guide 4 and be directed toward the control board 34. The air sucked in by the motor portion 3 may flow through the sixth flow path F6 and be condensed. The air sucked in by the motor portion 3 may condense in the axial direction A as the air passes through the sixth flow path F6. The air sucked in by the motor portion 3 may pass through the sixth flow path F6 and a flow rate of the air may increase. The air sucked in by the motor portion 3 may pass through the sixth flow path F6 and a density of the air may increase. The air sucked in by the motor portion 3 may pass through the sixth flow path F6 and cool the control board 34. The air sucked in by the motor portion 3 may exchange heat with the control board 34 through the sixth flow path F6. However, the flow of air sucked in by the motor portion 3 is not limited to the above description.

A flow of air sucked in by the motor portion 3 may reach the control board 34 according to an example embodiment. The control board 34 may change a direction of flow of air sucked in by the motor portion 3. The control board 34 may reflect the flow of air sucked in by the motor portion 3. The flow of air sucked in by the motor portion 3 may pass through the sixth flow path F6 and be reflected by the control board 34. The control board 34 may reflect the flow of air sucked in by the motor portion 3 and direct the air toward the discharge hole 62. The control board 34 may reflect the flow of air sucked in by the motor portion 3 and direct the air toward the lower gap 410. The control board 34 may reflect the flow of air sucked in by the motor portion 3 and direct the air toward the seventh flow path F7. However, the control board 34 and the flow of air are not limited to the above description.

The seventh flow path F7 according to an example embodiment may pass through the control board 34 and be directed toward the discharge hole 62. The internal flow path may include the seventh flow path F7 passing through the control board 34 and directed toward the control support frame 6. The seventh flow path F7 may pass through the control board 34 and be directed toward the support frame 6. The air sucked in by the motor portion 3 may be directed toward the discharge hole 62 included in the support frame 6 after cooling the control board 34. However, the flow of air in the seventh flow path F7 is not limited to the above description.

An enlarged view E of FIG. 18 is an enlarged view for explaining an interval between the second guide 4 and the support frame 6 according to an example embodiment.

Referring to the enlarged view E, the second guide 4 according to an example embodiment may be located at a certain interval L3 from the support frame 6. The second guide 4 may be located at the certain interval L3 from the discharge hole 62. The end 40 of the second guide 4 may be located at the certain interval L3 from the support frame 6. The end 40 of the second guide 4 may be located at the certain interval L3 from the discharge hole 62. The nozzle portion 41 may be located at the certain interval L3 from the support frame 6. The nozzle portion 41 may be located at the certain interval L3 from the discharge hole 62. The certain interval L3 may be 1 mm or more and 10 mm or less. The certain interval L3 may be 1.5 mm or more and 8 mm or less. The certain interval L3 may be 2 mm or more and 5 mm or less. However, the certain interval L3 is only an example embodiment and is not limited thereto.

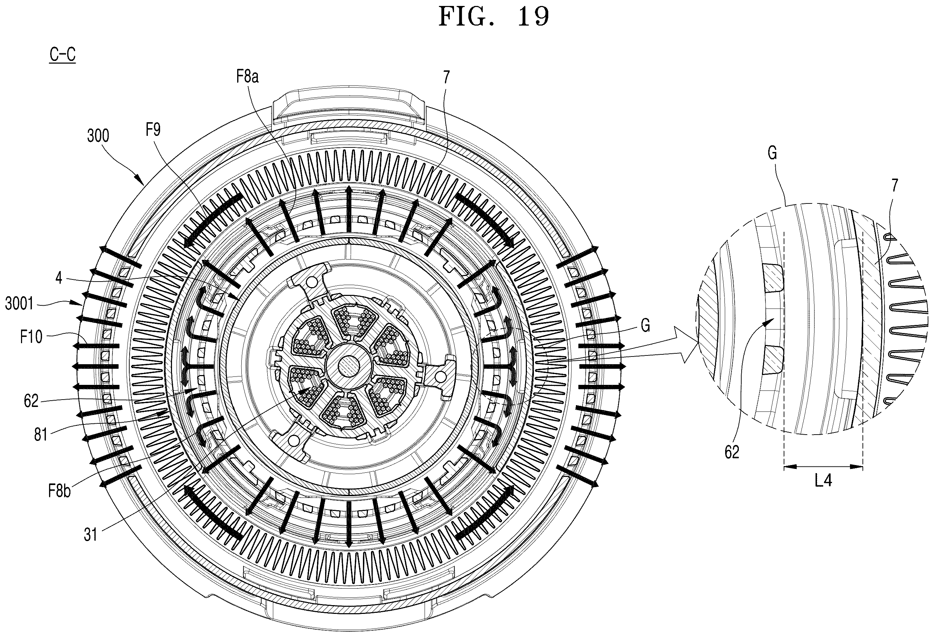

FIG. 19 is a cross-sectional view of the motor portion 3 of FIG. 6 viewed in C-C direction according to an example embodiment.

Referring to FIGS. 6, 10, 12, 13, 14 and 17 to 19, the internal flow path of the motor portion 3 according to an example embodiment may include the eighth flow path F8 configured to pass through the discharge hole 62. The eighth flow path F8 may include a direct flow path F8a and a bypass flow path F8b. The direct flow path F8a may be a flow path that does not face the discharge portion 3001 of the motor portion 3. The bypass flow path F8b may be a flow path facing the discharge portion 3001 of the motor portion 3. The direct flow path F8a may be a flow path in which air passing through the discharge hole 62 flows directly toward the filter 7. The bypass flow path F8b may be a flow path through which air passing through the discharge hole 62 moves along an inner circumferential surface of the barrier 81 toward the filter 7. The barrier 81 may prevent air passing through the bypass flow path F8b from flowing directly toward the discharge portion 3001. The barrier 81 may reduce the noise of the air discharged by the motor portion 3. However, the configuration and arrangement of the barrier 81 and the bypass flow path F8b are not limited to the above description.

The internal flow path of the motor portion 3 according to an example embodiment may include a ninth flow path F9 passing through the filter 7 and directed toward the discharge hole 62. The ninth flow path F9 may pass through the filter 7 and be directed toward the discharge hole 62. The air sucked in by the motor portion 3 may pass through the ninth flow path F9, and internal noise may be reduced. The ninth flow path F9 may reduce noise inside the motor portion 3. However, the configuration and function of the ninth flow path F9 are not limited to the above description.

The internal flow path of the motor portion 3 according to an example embodiment may include a tenth flow path F10 configured to discharge air through the discharge portion 3001. The tenth flow path F10 may be a flow path passing through the discharge portion 3001. The tenth flow path F10 may discharge the air sucked in by the fourth suction portion 3000 of the motor portion 3 through the discharge portion 3001. However, the arrangement of the tenth flow path F10 is not limited to the above description.

An enlarged view G of FIG. 19 is an enlarged view for explaining an interval L4 between the discharge hole 62 and the barrier 81 according to an example embodiment.

Referring to the enlarged view G, the discharge hole 62 according to an example embodiment may be located at a certain interval L4 from the barrier 81. The certain interval L4 may be 1 mm or more and 10 mm or less. The certain interval L4 may be 1.5 mm or more and 8 mm or less. The certain interval L4 may be 2 mm or more and 5 mm or less. When the discharge hole 62 and the barrier 81 are located at the certain interval L4, air passing through the bypass flow path F8b may flow smoothly. However, the certain interval L4 is only an example embodiment and is not limited thereto.

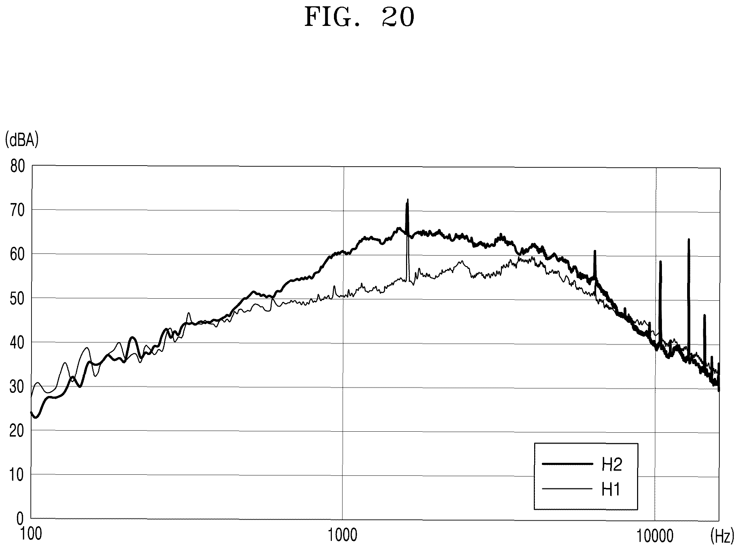

FIG. 20 is a diagram for explaining noise of the motor assembly 30 according to an example embodiment. In FIG. 20, the horizontal axis of the graph may be the frequency of noise. A unit of frequency may be hertz (Hz). The vertical axis of the graph may be the magnitude of the noise. A unit of noise level may be decibel (dBA).

In FIG. 20, a plot obtained by measuring noise of the motor assembly 30 according to an embodiment including the second guide 4 (see FIG. 10) and the filter support 8 (see FIG. 10) is indicated as H1. The second guide 4 according to an embodiment includes the nozzle portion 41 (see FIG. 17) located at the end 40, and the length L2 of the nozzle portion 41 is about 3 mm, and the angle D of the nozzle portion 41 is about 20°.

A plot obtained by measuring the noise of the motor assembly 30 according to a comparative example is indicated as H2. The motor assembly according to the comparative example is the same as the motor assembly 30 according to an embodiment except that the motor assembly according to the comparative example does not include the nozzle portion 41 and the filter support 8.

As seen from FIG. 20, a converted noise value of H1 is 83.5 dB. A converted noise value of H2 is seen to be 88.8 dB. The motor assembly 30 including the nozzle portion 41 (see FIG. 17) and a blocking portion may reduce noise by about 5.3 dB. However, the above description is only an exemplary noise reduction effect and is not limited thereto.

The converted noise value may be a noise value converted from separate noise values measured for respective frequencies. The converted noise value may be the sum of the separate noise values. The converted noise value may be the sum of the total amplitudes of the separate noise values. The converted noise value may be a value obtained by summing separate noise values by using the dB summation method. The dB summation method may be represented based on the following expression.

$$dB\ sum = 10\log(10^{\frac{dB1}{10}} + 10^{\frac{dB2}{10}} + ... + 10^{\frac{dBn}{10}})$$

In this case, $dB_1$ to $dB_n$ may be separate noise values. The separate noise value may be a value obtained by converting a difference in vibration acceleration for each frequency. The separate noise value may be a value obtained by applying a weight for each frequency. The separate noise value may be a vibration level, a sound pressure level, or a sound power level.

However, the converted noise value is not limited to the above description.

The motor assembly 30 including the nozzle portion 41 and the blocking portion according to an example embodiment may have a noise reduction effect. The motor assembly 30 including the nozzle portion 41 and the blocking portion may have a significant noise reduction effect at 600 Hz to 3000 Hz. However, the above description is only an exemplary range and is not limited thereto.

The above embodiments are only exemplary, and those of skill in the art will understand that various modifications and equivalent other embodiments are possible therefrom. Therefore, the true technical scope of the disclosure should be determined by the technical spirit of the appended claims.

A motor assembly according to an example embodiment may be configured to generate suction force in a vacuum cleaner.

A motor assembly according to an example embodiment may include a control board, a fan motor disposed on the control board, an impeller that is rotated by the fan motor, a first guide that covers the impeller and guides sucked-in air in an axial direction of the impeller along an air flow path to be directed to the control board, and a second guide disposed between the first guide and the control board to cover the fan motor and guide the air flow path, wherein the second guide is located apart from the control board and includes a nozzle portion having a gradient of a certain angle with respect to the axial direction at an end facing the control board.

The gradient of the certain angle with respect to the axial direction of the nozzle portion may be 5° to 60°.

A length of the nozzle portion may be 2 mm or more.

A thickness of the second guide may be 1 mm or more and 3 mm or less.

An interval between the second guide and the control board may be 5 mm.

The second guide may include a clip portion and a flexible link, and the clip portion may be configured to fasten two end portions of the second guide as the link is curved.

The motor assembly may further include a guide cover surrounding the first guide, and the guide cover may include an elastic material.

The guide cover may seal a space between the first guide and the second guide.

The motor assembly may further include a support frame covering the second guide, and the support frame includes a plurality of discharge holes arranged along an outer circumferential surface.

The motor assembly may further include a housing including a suction portion in the axial direction and a discharge portion in a radial direction that intersects with the axial direction and constituting an outer appearance of the motor assembly.

The motor assembly may further include a filter disposed between the support frame and the housing, and the filter may be configured to collect foreign substances discharged to the discharge portion.

The motor assembly may further include a filter support disposed between the filter and the support frame, to support the filter, and

The filter support may include a barrier that covers, from an outside, the discharge hole located to face discharge portion among the plurality of discharge holes.

An interval between the barrier and the discharge hole may be 4 mm or more and 6 mm or less.

A dust collection device according to an example embodiment may be configured to generate suction force in a vacuum cleaner and temporarily store foreign substances sucked in by the vacuum cleaner.

A dust collection device according to an example embodiment may include a motor portion including a motor assembly, and a dust collector configured to separate foreign substances from air sucked in by the vacuum cleaner and temporarily store the foreign substances.

A vacuum cleaner according to an example embodiment may include a suction device configured to suck in foreign substances, a vacuum cleaner body including the dust collection device and configured to store the foreign substances sucked in through the suction device, and a transfer portion disposed between the suction device and the vacuum cleaner body and configured to transfer sucked-in foreign substances from the suction device to the vacuum cleaner body.

A vacuum cleaner according to an example embodiment may provide a small-sized vacuum cleaner.

A dust collection device according to an example embodiment may provide a small-sized dust collection device.

A motor assembly according to an example embodiment may provide a small-sized motor assembly.

A vacuum cleaner according to an example embodiment may provide a vacuum cleaner having strong suction force.

A dust collection device according to an example embodiment may provide a dust collection device having strong suction force.

A motor assembly according to an example embodiment may provide a motor assembly having strong suction force.

A motor assembly according to an example embodiment may provide a motor assembly having strong output.

A vacuum cleaner according to an example embodiment may provide a vacuum cleaner with reduced noise.

A dust collection device according to an example embodiment may provide a dust collection device with reduced noise.

A motor assembly according to an example embodiment may provide a motor assembly with reduced noise.

A second guide according to an example embodiment may reduce noise of a motor assembly.

A flow cohesive portion according to an example embodiment may reduce noise of a motor assembly.

A flow cohesive portion according to an example embodiment may prevent noise of a motor assembly from spreading.

A flow cohesive portion according to an example embodiment may prevent noise of a motor assembly from widely spreading.

A filter support according to an example embodiment may reduce noise of a motor assembly.

A barrier according to an example embodiment may reduce noise of a motor assembly.

A barrier according to an example embodiment may prevent noise of a motor assembly from being directed to a discharge portion.

A barrier according to an example embodiment may prevent noise of a motor assembly from being directly discharged.

A motor assembly according to an example embodiment may provide a motor assembly with improved cooling performance of a control board.

A motor assembly according to an example embodiment may provide a motor assembly that prevents overheating of a control board.

A second guide according to an example embodiment may prevent overheating of a control board.

A flow cohesive portion according to an example embodiment may prevent overheating of a control board.

A flow cohesive portion according to an example embodiment may increase the heat exchange efficiency between air sucked in by the motor assembly and the control board.

A flow cohesive portion according to an example embodiment may condense air sucked in by a motor assembly.

A flow cohesive portion according to an example embodiment may condense air sucked in by a motor assembly and then transfer the air to a control board.

A second guide according to an example embodiment may have a structure to be coupled to a fan motor.

**Claims**

1. A motor assembly (30) configured to generate suction force in a vacuum cleaner (1), the motor assembly (30) comprising:

   a control board (34);
   a fan motor (31);
   an impeller (32) that is rotated by the fan motor (31);
   a first guide (33) that covers the impeller (32) and guides sucked-in air in an axial direction (A) of the impeller (32) along an air flow path to be directed to the control board (34); and
   a second guide (4) disposed between the first guide (33) and the control board (34) to cover the fan motor (31) and guide air along the air flow path,
   wherein the second guide (4) is located apart from the control board (34), and comprises a nozzle portion (41) having a gradient of a certain angle (D) with respect to the axial direction at an end (40) facing the control board (34).

2. The motor assembly (30) of claim 1, wherein the gradient of the certain angle (D) with respect to the axial direction of the nozzle portion (41) is 5° to 60°.

3. The motor assembly (30) of claim 2, wherein a length of the nozzle portion (41) is 2 mm or more.

4. The motor assembly (30) of any one of claims 1 to 3, wherein a thickness (T) of the second guide (4) is 1 mm or more and 3 mm or less.

5. The motor assembly (30) of any one of claims 1 to 4, wherein an interval between the second guide (4) and the control board (34) is 5 mm or more.

6. The motor assembly (30) of any one of claims 1 to 5, wherein the second guide (4) comprises a clip portion (430) and a link (42), and the clip portion (430) is configured to fasten two side ends (43) of the second guide (4) as the link (42) is curved.

7. The motor assembly (30) of any one of claims 1 to 6, wherein the motor assembly (30) further comprises a guide cover (5) surrounding the first guide (33), and the guide cover (5) comprises an elastic material.

8. The motor assembly (30) of claim 7, wherein the guide cover (5) seals a space between the first guide (33) and the second guide (4).

9. The motor assembly (30) of any one of claims 1 to 8, wherein the motor assembly (30) further comprises a support frame (6) covering the second guide (4), and the support frame (6) comprises a plurality of discharge holes (62) arranged along an outer circumferential surface (61).

10. The motor assembly (30) of claim 9, wherein the motor assembly (30) further comprises a housing (300) comprising a suction portion in the axial direction (A) and a discharge portion (3001) in a radial direction that intersects with the axial direction (A), and constituting an outer appearance of the motor assembly (30).

11. The motor assembly (30) of claim 10, wherein the motor assembly (30) further

    comprises a filter (7) disposed between the support frame (6) and the housing (300), and
    the filter (7) is configured to collect foreign substances discharged to the discharge portion (3001).

12. The motor assembly (30) of claim 11, wherein the motor assembly (30) further

    comprises a filter support (8) disposed between the filter (7) and the support frame (6), to support the filter (7), and

the filter support (8) comprises a barrier (81) that covers, from an outside, a discharge hole (62) that is from among the plurality of discharge holes (62) and located to face the discharge portion (3001).

13. The motor assembly (30) of claim 12, wherein an interval between the barrier (81) and the discharge hole (62) is 4 mm or more and 6 mm or less.

14. A dust collection device (20) configured to generate suction force in a vacuum cleaner (1) and temporarily store foreign substances sucked in by the vacuum cleaner (1), the dust collection device (20) comprising:

   a motor portion (3) comprising the motor assembly (30) of any one of claims 1 to 13; and
   a dust collector (21) configured to separate foreign substances from air sucked in by the vacuum cleaner (1) and temporarily store the foreign substances.

15. A vacuum cleaner (1) comprising:

   a suction device (11) configured to suck in foreign substances;
   a vacuum cleaner body (10) comprising the dust collection device (20) of claim 14 and configured to store the foreign substances sucked in through the suction device (11); and
   a transfer portion (12) disposed between the suction device (11) and the vacuum cleaner body (10) and configured to transfer sucked-in foreign substances from the suction device (11) to the vacuum cleaner body (10).

# FIG. 1

EP 4 746 263 A1

# FIG. 2

EP 4 746 263 A1

FIG. 3

# FIG. 4

EP 4 746 263 A1

# FIG. 5

EP 4 746 263 A1

# FIG. 6

# FIG. 7

EP 4 746 263 A1

# FIG. 8

EP 4 746 263 A1

EP 4 746 263 A1

# FIG. 9

# FIG. 10

EP 4 746 263 A1

# FIG. 11

EP 4 746 263 A1

# FIG. 12

# FIG. 13

# FIG. 14

D-D

A

330

5

32

33

311

51

3111

54

31

4

41

45

40

341

410

34

z

x

y

# FIG. 15

# FIG. 16

# FIG. 17

FIG. 18

B-B

# FIG. 19

# FIG. 20

EP 4 746 263 A1

## INTERNATIONAL SEARCH REPORT

| International application No. |
| --- |
| **PCT/KR2024/010620** |

| A. | CLASSIFICATION OF SUBJECT MATTER |
| --- | --- |

**H02K 7/14**(2006.01)i; **H02K 9/14**(2006.01)i; **H02K 9/26**(2006.01)i; **H02K 5/08**(2006.01)i; **H02K 5/20**(2006.01)i; **H02K 9/06**(2006.01)i; **A47L 9/22**(2006.01)i; **A47L 9/16**(2006.01)i

According to International Patent Classification (IPC) or to both national classification and IPC

| B. | FIELDS SEARCHED |
| --- | --- |

Minimum documentation searched (classification system followed by classification symbols)

H02K 7/14(2006.01); A47L 9/00(2006.01); A47L 9/28(2006.01); F04D 29/44(2006.01); F04D 29/58(2006.01); H02K 5/16(2006.01); H02K 9/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 청소기(vacuum cleaner), 모터 어셈블리(motor assembly), 제어기판(control board), 임펠러(impeller), 가이드(guide), 각도(angle), 구배(gradient), 노즐부(nozzle section)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2020-0044737 A (LG ELECTRONICS INC.) 29 April 2020 (2020-04-29) <br> See claim 1; and figure 1. | 1-4 |
| Y | JP 2019-097373 A (NIPPON DENSAN CORP.) 20 June 2019 (2019-06-20) <br> See paragraphs [0033]-[0045]; and figures 1-5. | 1-4 |
| A | KR 10-2022-0083387 A (LG ELECTRONICS INC.) 20 June 2022 (2022-06-20) <br> See claim 1; and figure 1. | 1-4 |
| A | KR 10-2018-0100202 A (DYSON TECHNOLOGY LIMITED) 07 September 2018 (2018-09-07) <br> See paragraphs [0090]-[0093]; and figure 3. | 1-4 |
| A | JP 2018-123738 A (NIPPON DENSAN CORP.) 09 August 2018 (2018-08-09) <br> See claims 1-2; and figures 2-3. | 1-4 |

| ☐ Further documents are listed in the continuation of Box C. | ☑ See patent family annex. |
| --- | --- |

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **22 October 2024** | **22 October 2024** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | |
|---|---|
| International application No. | |
| **PCT/KR2024/010620** | |

| | |
|---|---|
| **Box No. II** | **Observations where certain claims were found unsearchable (Continuation of item 2 of first sheet)** |

This international search report has not been established in respect of certain claims under Article 17(2)(a) for the following reasons:

1. ☐ Claims Nos.:
   because they relate to subject matter not required to be searched by this Authority, namely:

2. ☑ Claims Nos.: **8, 10-13, 15**
   because they relate to parts of the international application that do not comply with the prescribed requirements to such an extent that no meaningful international search can be carried out, specifically:

   Claims 8, 10-13 and 15 refer to claims violating the manner of referring to multiple dependent claims (PCT Rule 6.4(a)), and thus are unclear.

3. ☑ Claims Nos.: **5-7, 9, 14**
   because they are dependent claims and are not drafted in accordance with the second and third sentences of Rule 6.4(a).

Form PCT/ISA/210 (continuation of first sheet) (July 2022)

EP 4 746 263 A1

International application No.

**PCT/KR2024/010620**

| Patent document cited in search report | | | Publication date (day/month/year) | Patent family member(s) | | | Publication date (day/month/year) |
|---|---|---|---|---|---|---|---|
| KR | 10-2020-0044737 | A | 29 April 2020 | AU | 2019-250259 | A1 | 07 May 2020 |
| | | | | AU | 2019-250259 | B2 | 01 July 2021 |
| | | | | EP | 3639717 | A2 | 22 April 2020 |
| | | | | EP | 3639717 | A3 | 27 May 2020 |
| | | | | KR | 10-2078716 | B1 | 18 February 2020 |
| | | | | KR | 10-2425457 | B1 | 25 July 2022 |
| | | | | TW | 202021522 | A | 16 June 2020 |
| | | | | TW | I741387 | B | 01 October 2021 |
| | | | | US | 11187246 | B2 | 30 November 2021 |
| | | | | US | 11773874 | B2 | 03 October 2023 |
| | | | | US | 2020-0124055 | A1 | 23 April 2020 |
| | | | | US | 2022-0049719 | A1 | 17 February 2022 |
| | | | | US | 2023-0383765 | A1 | 30 November 2023 |
| JP | 2019-097373 | A | 20 June 2019 | CN | 209586730 | U | 05 November 2019 |
| | | | | US | 2019-0159640 | A1 | 30 May 2019 |
| KR | 10-2022-0083387 | A | 20 June 2022 | AU | 2021-282535 | A1 | 30 June 2022 |
| | | | | AU | 2021-282535 | B2 | 07 December 2023 |
| | | | | EP | 4012187 | A1 | 15 June 2022 |
| | | | | TW | 202224318 | A | 16 June 2022 |
| | | | | TW | I807355 | B | 01 July 2023 |
| | | | | US | 2022-0186735 | A1 | 16 June 2022 |
| KR | 10-2018-0100202 | A | 07 September 2018 | AU | 2016-387302 | A1 | 27 July 2017 |
| | | | | AU | 2016-387302 | B2 | 17 January 2019 |
| | | | | CN | 107007200 | A | 04 August 2017 |
| | | | | CN | 107007200 | B | 15 September 2020 |
| | | | | EP | 3405084 | A1 | 28 November 2018 |
| | | | | EP | 3405084 | B1 | 15 April 2020 |
| | | | | GB | 2546733 | A | 02 August 2017 |
| | | | | GB | 2546733 | B | 04 July 2018 |
| | | | | JP | 2017-127641 | A | 27 July 2017 |
| | | | | KR | 10-2134741 | B1 | 16 July 2020 |
| | | | | US | 10743733 | B2 | 18 August 2020 |
| | | | | US | 2017-0209014 | A1 | 27 July 2017 |
| | | | | WO | 2017-125705 | A1 | 27 July 2017 |
| JP | 2018-123738 | A | 09 August 2018 | CN | 108374794 | A | 07 August 2018 |
| | | | | CN | 208057449 | U | 06 November 2018 |
| | | | | EP | 3354903 | A1 | 01 August 2018 |
| | | | | US | 2018-0216635 | A1 | 02 August 2018 |

Form PCT/ISA/210 (patent family annex) (July 2022)